# EUROPEAN PATENT APPLICATION

(11) **EP 4 827 206 A1**
(43) Date of publication of application: **21.10.2026**
(21) Application number: 24902845.7
(22) Date of filing: 11.12.2024
(51) Int. Cl.: H04W 72/12

(54) **WIRELESS COMMUNICATION METHOD AND APPARATUS, DEVICE, AND READABLE STORAGE MEDIUM**

(30) Priority: 13.12.2023 CN 202311719925
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); LI, Gen, Dongguan, Guangdong 523863 (CN)
(74) Representative: Studio Torta S.p.A.
(86) International application number: PCT/CN2024/138434
(87) International publication number: WO 2025/124426

(57) **Abstract**

The present application discloses a wireless communication method, a wireless communication apparatus, a device, and a readable storage medium, and pertains to the field of communication. The method of embodiments of the present application includes: determining, by a terminal, target resource indication information according to a first resource unit or a target resource unit, where the first resource unit is a resource unit that is in use or activated, the target resource unit is a resource unit indicated by control signaling, and the target resource indication information is associated with a target object; and determining at least one of the following according to the target resource indication information: that target resource indication information is valid; that the target resource indication information is invalid; or scheduling information of the target object.

## Description

### CROSS-REFERENCE TO RELATED APPLICATIONS

The present application claims priority to the Chinese Patent Application No. 202311719925.7, filed with the China National Intellectual Property Administration on December 13, 2023, and entitled "WIRELESS COMMUNICATION METHOD AND APPARATUS, DEVICE, AND READABLE STORAGE MEDIUM", which is incorporated herein by reference in its entirety.

### TECHNICAL FIELD

The present application pertains to the field of communication technologies, and specifically relates to a wireless communication method, a wireless communication apparatus, a device, and a readable storage medium.

### BACKGROUND

In the related art, a terminal may be configured with a plurality of resource units, such as bandwidth parts (Bandwidth Part, BWPs), BWP combinations, and carriers. The plurality of resource units are associated with at least one object (for example, a cell, a cell combination, or a cell set), and a network-side device may schedule/indicate at least one object, for example, to schedule/indicate at least one object by means of resource indication information (for example, frequency domain resource assignment (frequency domain resource assignment, FDRA) information).

The network-side device may trigger a target object to perform switching between resource units, such as performing BWP switching, and in this case, how the terminal interprets the resource indication information associated with the target object to determine the meaning of the resource indication information is an urgent problem to be solved.

### SUMMARY

Embodiments of the present application provide a wireless communication method, a wireless communication apparatus, a device, and a readable storage medium. A terminal is capable of interpreting resource indication information associated with a target object according to a resource unit that is in use or activated or a target resource unit.

According to a first aspect, a wireless communication method is provided. The method includes:
determining, by a terminal, target resource indication information according to a first resource unit or a target resource unit, where the first resource unit includes a resource unit that is in use or activated, the target resource unit is a resource unit indicated by control signaling, and the target resource indication information is associated with a target object; and
determining at least one of the following according to the target resource indication information:
   that target resource indication information is valid; that the target resource indication information is invalid; or scheduling information of the target object.

According to a second aspect, a wireless communication method is provided. The method includes:
indicating, by a network-side device, target resource indication information to a terminal, where the target resource indication information is associated with a target object, and the target resource indication information is used to determine at least one of the following: that target resource indication information is valid; that the target resource indication information is invalid; or scheduling information of the target object.

According to a third aspect, a wireless communication apparatus is provided, including:
a processing unit, configured to determine target resource indication information according to a first resource unit or a target resource unit, where the first resource unit includes a resource unit that is in use or activated, the target resource unit is a resource unit indicated by control signaling, and the target resource indication information is associated with a target object; and
determine at least one of the following according to the target resource indication information:
   that target resource indication information is valid; that the target resource indication information is invalid; or scheduling information of the target object.

According to a fourth aspect, a wireless communication apparatus is provided, including:
a communication unit, configured to indicate target resource indication information to a terminal, where the target resource indication information is associated with a target object, and the target resource indication information is used to determine at least one of the following: that target resource indication information is valid; that the target resource indication information is invalid; or scheduling information of the target object.

According to a fifth aspect, a terminal is provided. The terminal includes a processor and a memory, where the memory stores a program or an instruction executable on the processor, and when the program or instruction is executed by the processor, the steps of the method according to the first aspect are implemented.

According to a sixth aspect, a network-side device is provided. The network-side device includes a processor and a memory, where the memory stores a program or an instruction executable on the processor, and when the program or instruction is executed by the processor, the step of the method according to the second aspect is implemented.

According to a seventh aspect, a readable storage medium is provided. A program or an instruction is stored on the readable storage medium, and when the program or instruction is executed by a processor, the steps of the method according to the first aspect are implemented, or the step of the method according to the second aspect is implemented.

According to an eighth aspect, a wireless communication system is provided, including a terminal and a network-side device. The terminal is configured to perform the steps of the method according to the first aspect, and the network-side device is configured to perform the step of the method according to the second aspect.

According to a ninth aspect, a chip is provided. The chip includes a processor and a communication interface, the communication interface is coupled to the processor, and the processor is configured to run a program or an instruction to implement the method according to the first aspect, or to implement the method according to the second aspect.

According to a tenth aspect, a computer program/program product is provided. The computer program/program product is stored in a storage medium, and the program/program product is executed by at least one processor to implement the steps of the wireless communication method according to the first aspect, or to implement the step of the wireless communication method according to the second aspect.

In the embodiments of the present application, the terminal may determine target resource indication information associated with a target object according to a resource unit that is in use or activated or a resource unit indicated by control signaling, and further determine the meaning of the target resource indication information according to the target resource indication information associated with the target object, such as that target resource indication information is valid or invalid, or scheduling information of the target object.

### BRIEF DESCRIPTION OF DRAWINGS

FIG. 1 is a schematic diagram of a communication system architecture according to embodiments of the present application;
FIG. 2 is a schematic flowchart of a wireless communication method according to embodiments of the present application;
FIG. 3 is a schematic block diagram of a wireless communication apparatus according to embodiments of the present application;
FIG. 4 is a schematic block diagram of a wireless communication apparatus according to embodiments of the present application;
FIG. 5 is a schematic block diagram of a communication device according to embodiments of the present application;
FIG. 6 is a schematic diagram of a hardware structure of a terminal according to embodiments of the present application; and
FIG. 7 is a schematic block diagram of a network-side device according to embodiments of the present application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by persons of ordinary skill in the art shall fall within the protection scope of the present application.

The terms "first", "second" and the like in the present application are used to distinguish similar objects and are not used to describe a specific order or sequence. It should be understood that the terms used in such a way may be interchangeable in appropriate circumstances such that the embodiments of the present application may be implemented in other orders than the order illustrated or described herein. In addition, objects distinguished by "first" and "second" are generally of the same type, and the quantities of the objects are not limited, for example, there may be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after the character.

The term "indication" in the present application may be a direct indication (or explicit indication) or an indirect indication (or implicit indication). The direct indication may be understood as the sender explicitly informing the receiver of specific information, operations to be performed, or request results in the sent indication; the indirect indication may be understood as the receiver determining corresponding information according to the indication sent by the sender, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies may also be applied to systems other than NR systems, such as the 6th Generation (6th Generation, 6G) communication system.

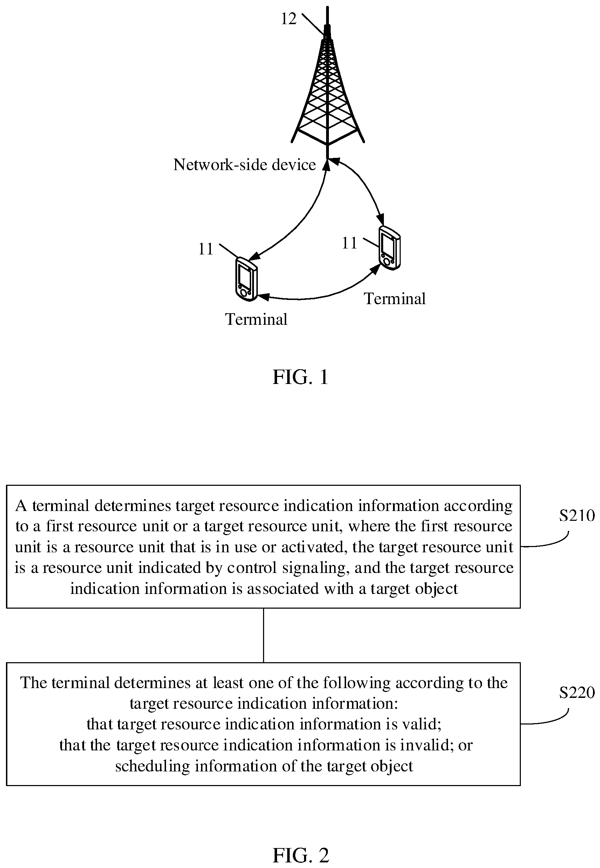

FIG. 1 is a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal computer, UMPC), a mobile Internet device (Mobile Internet Device, MID), an augmented reality (Augmented Reality, AR), virtual reality (Virtual Reality, VR) device, a robot, a wearable device (Wearable Device), flight vehicle (flight vehicle), vehicle user equipment (Vehicle User Equipment, VUE), a ship-borne device, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart anklet, a smart chain anklet, or the like), a smart wristband, smart clothing, or the like. The vehicle user equipment may also be called vehicle terminal, vehicle controller, vehicle module, vehicle component, vehicle chip, vehicle unit, or the like. It should be noted that the specific type of the terminal 11 is not limited in the embodiments of the present application.

The terminal may also be referred to as user equipment (User Equipment, UE), terminal device, access terminal, subscriber unit, subscriber station, mobile station, mobile console, remote station, remote terminal, mobile device, user terminal, terminal, wireless communication device, user agent, or user apparatus.

The network-side device 12 may include an access network device or core network device, where the access network device may also be referred to as radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or another appropriate term in the field. Provided that the same technical effects are achieved, the base station is not limited to a specific technical term. It should be noted that in the embodiments of the present application, the base station in the NR system is merely used as an example for introduction, and the specific type of the base station is not limited.

In a communication system, a network-side device may schedule a physical uplink shared channel (Physical Uplink Shared Channel, PUSCH) or a physical downlink shared channel (Physical Downlink Shared Channel, PDSCH) via downlink control information (Downlink Control Information, DCI).

In some scenarios, multi-cell scheduling DCI (multi-cell scheduling DCI, mc-DCI), such as DCI format 3-0 or DCI format 3-1, is introduced to schedule PUSCH or PDSCH of one or more cells.

In some scenarios, the communication system may support the following framework:
a plurality of cells may be divided into a plurality of cell sets (cell set). For example, a cell set (cell 1/2/3/4/5/6/7/8) may be divided into two cell sets, namely cell set (cell 1/2/3/4) and cell set (cell 5/6/7/8).

A cell set may be divided into a plurality of cell combinations (cell combination). For example, the cell set (cell 1/2/3/4) may include cell combination (cell 1/2/3, cell 1/2/4, cell 1/3).

One mc-DCI may schedule/indicate one cell combination at a time.

Methods for mc-DCI scheduling/indication of one cell combination include the following two methods.

### Method 1: cell indicator based scheme (cell indicator based scheme)

For example, radio resource control (Radio Resource Control, RRC) configures a cell combination table for each cell set, and each cell combination table corresponds to an index (index). Mc-DCI carries a field used to indicate one index. For example, '01' corresponds to cell 1/3, and if the mc-DCI indicates '01', it means that cell1/3 is scheduled/indicated, and the mc-DCI only carries frequency domain resource assignment (frequency domain resource assignment, FDRA) for cell 1/3.

### Method 2: FDRA based scheme (FDRA based scheme)

For example, in the above example, the mc-DCI carries FDRA fields for cell 1/2/3/4. If the FDRA field corresponding to a certain cell indicates an invalid value, it means that this cell is not scheduled.

In some scenarios, each cell set has a reference cell (reference cell).

The number of blind detections and DCI size for mc-DCI corresponding to the cell set are calculated based on the reference cell.

In some scenarios, each reference cell, each cell set or each cell has a corresponding limitation on the number of DCIs or scheduling occasions.

For example, within one monitoring occasion (monitoring occasion), the number of mc-DCIs for the reference cell or cell set is at most N1 (each of the mc-DCIs being capable of scheduling at least a subset of cells within the cell set).

As another example, within one monitoring occasion (monitoring occasion), the number of single-cell scheduling DCIs (single-cell scheduling DCI, sc-DCIs) for one cell within the cell set is at most N2 (each of the sc-DCIs being capable of scheduling the cell).

In performing downlink assignment index (Downlink Assignment Index, DAI) counting, if a cell combination is scheduled, DAI counting is performed for a cell with a specific ID (smallest cell ID) within the cell combination (for example, incrementing DAI by one), or DAI counting is performed based on that specific ID (smallest ID) cell within the cell combination to generate hybrid automatic repeat request acknowledgement (Hybrid Automatic Repeat Request Acknowledgement, HARQ-ACK) bits.

Here, it may be considered that DAI counting is associated with the cell having the specific ID (the smallest cell ID) within the cell combination.

In generation of HARQ-ACK bits, the cell set dimension is traversed, and each cell in the cell set is traversed, thereby concatenating HARQ-ACK bit strings corresponding to each cell to generate target HARQ-ACK bits. The HARQ-ACK bits corresponding to one cell combination are placed at a bit position corresponding to the cell with the specific ID (smallest cell ID) within the cell combination. For cells that have not been scheduled, a corresponding negative acknowledgement (Negative Acknowledgement, NACK) is generated.

In some cases, mc-DCI may carry dormancy indication information, which may be carried in two ways:
Method 1: carrying an explicit dormancy indication field; and
Method 2: if the FDRA field corresponding to one or more cells is an invalid value, dormancy indication information is indicated using fields such as modulation and coding scheme (Modulation and Coding Scheme, MCS) or HARQ process (HARQ Process) corresponding to the cell with the specific ID (smallest cell ID) among those cells.

In some scenarios, the terminal may perform BWP switching based on a bandwidth part (Bandwidth Part, BWP) indicator (BWP indicator) from a network-side device.

For example, if the terminal is operating on BWP A, but a BWP indicator in DCI indicates BWP B, the terminal needs to switch from BWP A to BWP B. However, the number of bits of an information field in the DCI is still determined according to the configuration of BWP A. For example, the number of bits of an FDRA field is still determined based on the resource allocation type and bandwidth of BWP A. However, during interpretation, the terminal truncates or pads the FDRA field, and then interpret the FDRA field.

In some cases, if the number of bits N required for the FDRA field corresponding to the configuration of BWP B is less than the number of bits M of the FDRA field in the DCI, the terminal may interpret only based on the least significant N bits to obtain actual frequency domain allocation information. This may also be interpreted as that the first M - N bits of the FDRA field are truncated, and the terminal interprets based on the remaining N bits to obtain the actual frequency domain allocation information.

In other cases, if the number of bits N required for the FDRA field corresponding to the configuration of BWP B is greater than the number of bits M in the FDRA field in DCI, the terminal pads N - M zeros before the M bits, and interprets the resulting N bits after padding to obtain the actual frequency domain allocation information.

In some scenarios, invalid values of the FDRA field in mc-DCI are defined as follows:
for resource allocation type 0 (denoted as type0), an FDRA field set to all 0s is an invalid value;
for resource allocation type 1 (denoted as type1), an FDRA field set to all 1s is an invalid value;
for dynamic switching resource allocation type (denoted as dynamic), an FDRA field set to all 1s or all 0s is an invalid value;
for resource allocation type 2 (denoted as type2) with SCS of 30 kHz (that is, µ = 1), an FDRA field set to all 0s is an invalid value; and
for resource allocation type 2 with SCS of 15kHz (that is, µ = 0), an FDRA field set to all 1s is an invalid value.

When the FDRA field is an invalid value, a cell associated with the FDRA field is not scheduled.

In some scenarios, if it is known that the FDRA fields corresponding to certain cells are invalid FDRA, at least some information fields corresponding to the cell in mc-DCI have a dual function:
1. the FDRA field associated with the cell indicates that the cell is not scheduled;
2. an MCS or other information fields associated with the cell may be used to indicate some special information, such as dormancy indication information, enhanced type3 codebook (enhanced type3 codebook) related information, or HARQ retransmission (HARQ retransmission) related information.

For ease of understanding the embodiments of the present application, the technical problems addressed by the present application are described below.

Problem A: In the related art, if mc-DCI triggers BWP switching, and the number of FDRA bits required by the BWP indicated by the BWP indicator is greater than the number of FDRA bits required by the current BWP, the terminal pads zeros to the FDRA field and interprets the information based on the zero-padded FDRA field. However, this design has defects. For example, when the resource allocation type of the BWP indicated by the BWP indicator is type1 or type2, with µ = 1, after the FDRA field is padded with zeros, the resulting FDRA field is never all "1"s, and thus never indicates an invalid value. In this case, it is not possible to determine based on the FDRA field that the cell is actually not scheduled, that is, this approach cannot indicate an invalid value.

Problem B: If it is modified to interpret the FDRA field based on the current BWP, and if the FDRA field is an invalid FDRA, it means that the FDRA obtained after truncation or zero-padding to the invalid FDRA cannot be actually used for scheduling, even if the FDRA would be valid scheduling information for the BWP indicated by the BWP indicator. For example, for the current BWP, FDRA = 11 is an invalid FDRA, and two zeros need to be padded to obtain FDRA = 0011, which is valid scheduling information for the BWP indicated by the BWP indicator, but cannot be actually used for scheduling.

Therefore, when a resource unit (for example, a BWP) of the terminal is switched, how to determine scheduling information of an object (for example, a cell) of the terminal is an urgent problem to be solved.

The following describes in detail a wireless communication method provided in the embodiments of the present application through some embodiments and application scenarios thereof with reference to the accompanying drawings.

FIG. 2 is a schematic diagram of a wireless communication method according to embodiments of the present application. As shown in FIG. 2, the method 200 includes, for example, the following content.

S210: A terminal determines target resource indication information according to a first resource unit or a target resource unit, where the first resource unit includes a resource unit that is in use or activated, the target resource unit is a resource unit indicated by control signaling, and the target resource indication information is associated with a target object.

In some embodiments, the first resource unit includes a (active) BWP that is in use or activated (active). Determining the target resource indication information includes determining that the target resource indication information is valid or invalid, and/or determining scheduling information (for example, allocated resources) corresponding to the target resource indication information.

In some embodiments, the target resource indication information may refer to a value corresponding to a first information field (for example, an FDRA field), or a meaning corresponding to the first information field (for example, an FDRA field).

S220: The terminal determines at least one of the following according to the target resource indication information:
that target resource indication information is valid;
that the target resource indication information is invalid; or scheduling information of the target object.

The resource unit described in the embodiments of the present application may include, but is not limited to, at least one of the following:
BWP, cell, carrier, frequency resource, resource set, subchannel, resource pool, resource block (Resource Block, RB) set (RB set), BWP combination (BWP combination), cell combination, carrier combination, frequency resource combination, resource set combination, subchannel combination, resource pool combination, and RB set combination.

The object described in the embodiments of the present application may include, but is not limited to, at least one of the following:
BWP, cell, carrier, frequency resource, resource set, subchannel, resource pool, resource block (Resource Block, RB) set (RB set), BWP combination, cell combination, carrier combination, frequency resource combination, resource set combination, subchannel combination, resource pool combination, RB set combination, and cell set.

In some embodiments, the first resource unit/target resource unit is different from the target object.

For example, the first resource unit is a first BWP or a first BWP combination, the target resource unit is a target BWP or a target BWP combination, and the target object is a target cell, a target cell combination, or a target cell set.

For another example, the first resource unit is a first carrier, the target resource unit is a target carrier, and the target object is a target BWP or a target BWP combination.

In some embodiments, the first resource unit may be referred to as source resource unit. For example, the first resource unit is a first BWP, and the first BWP may be referred to as source BWP (source BWP).

In some embodiments, the first resource unit/target resource unit is associated with a target object.

For example, the first BWP/target BWP is associated with the same cell/cell combination/cell set.

For another example, the first carrier/target carrier is associated with the same cell/cell combination/cell set.

In the following examples, description is made by taking the first resource unit as a first BWP, the target resource unit as a target BWP, and the target object as a target cell as an example for description. They may also be replaced by other resource units and other objects, and this is not limited in the present application.

It should be understood that the embodiments of the present application may apply a multi-cell scheduling (mc-scheduling) scenario, or may apply a single cell with multiple carrier (single cell with multiple carrier) scheduling scenario. For example, one object (for example, one cell) simultaneously includes one or more carriers, one or more frequency bands (band), one or more subbands (subband), or one or more activated BWPs.

In some embodiments, the control signaling may be DCI, RRC signaling, or other higher-layer signaling, such as a media access control control element (Media Access Control Control Element, MAC CE), and this is not limited in the present application.

In some embodiments, the target BWP is indicated by BWP indication information (BWP indicator), and the BWP indication information may be carried in control signaling.

In some embodiments, the scheduling information of the target object may include, but is not limited to, at least one of the following:
resources scheduled for the target object, whether the target object is scheduled, and whether the scheduling information is valid or invalid.

Optionally, when the scheduling information is invalid, it may be considered that the target object is not scheduled, or when the scheduling information is valid, it may be considered that the target object is scheduled.

In some embodiments, that the target resource indication information is invalid may be understood as: a value corresponding to the target resource indication information does not correspond to scheduling information, and/or the target object is not scheduled, and/or a value of the target resource indication information is an invalid value.

In some embodiments, that the target resource indication information is valid may be understood as: a value corresponding to the target resource indication information corresponds to scheduling information, and/or the target object is scheduled, and/or the value of the target resource indication information is a valid value.

In some embodiments, the target resource indication information may be used to indicate resources on the target object, such as frequency resources, resource sets, RB sets, frequency resource combinations, resource set combinations, or RB set combinations.

In some embodiments, the target resource indication information is determined by interpreting a first information field.

Optionally, the first information field may be referred to as resource indication field or another name. For example, when the resource indication information is used to indicate frequency domain resources, the first information field may be referred to as FDRA field.

In some embodiments, the number of bits in the first information field is determined based on the configuration of the first resource unit.

In other words, the number of bits of the first information field is equal to the number of bits of resource indication information required by the first resource unit, denoted as M bits.

In some embodiments, the number of bits of resource indication information required by the target resource unit can be N bits, where N and M may be the same or different.

In some embodiments, the first information field may be obtained from first DCI.

In some embodiments, the terminal may interpret the first information field based on the first resource unit to determine the target resource indication information, or may interpret the first information field based on the target resource unit to determine the target resource indication information.

When the terminal interprets the first information field based on the target resource unit, since the number of bits of the first information field is the number of bits of resource indication information required by the first resource unit, if the number of bits of resource indication information required by the target resource unit is different from the number of bits of resource indication information required by the first resource unit, the terminal needs to perform padding or truncation processing to the first information field, and determine the target resource indication information based on the padded or truncated first information field.

For example, if the number of bits of resource indication information required by the target resource unit is greater than the number of bits of resource indication information required by the first resource unit, padding processing needs to be performed on the first information field, and the target resource indication information is determined based on the padded first information field. The number of bits of the padded first information field is N bits.

For another example, if the number of bits of resource indication information required by the target resource unit is less than the number of bits of resource indication information required by the first resource unit, truncation processing needs to be performed on the first information field, and the target resource indication information is determined based on the truncated first information field. The number of bits of the truncated first information field is N. For example, the first M - N bits of the first information field are truncated, that is, the target resource indication information is determined based on the least significant N bits.

In some embodiments, under a first indication scheme (for example, FDRA based scheme), the terminal determines scheduling information based on resource indication information; and under a second indication scheme (for example, cell indicator based scheme), the terminal determines scheduling information based on object indication information (for example, cell indication information).

For example, under the first indication scheme, if the resource indication information is an invalid value, it is determined that the target object associated with the resource indication information is not scheduled.

For another example, under the second indication scheme, the object indication information may indicate a scheduled object or an unscheduled object.

However, in some cases (for example, the first indication scheme), when the terminal interprets the first information field based on the target resource unit to determine the target resource indication information, the foregoing problem A may occur. For example, when the number of bits of resource indication information required by the target resource unit is greater than the number of bits of resource indication information required by the first resource unit, padding processing needs to be performed on the first information field, and when the target resource indication information is determined based on the padded first information field, the foregoing problem A may occur.

In view of this, in some embodiments of the present application, conditions for interpretation of the first information field based on the target resource unit may be constrained, so as to avoid occurrence of Problem A.

For example, under the first indication scheme, the first information field is interpreted based on the first resource unit, and under the second indication scheme, the first information field may be interpreted based on the first BWP or based on the target BWP, or the first information field may be ignored, and scheduling information of the target object is determined based on object indication information.

The following describes, with reference to Embodiment 1, a selection manner of a resource unit used by the terminal to determine target resource indication information.

### Embodiment 1

In some embodiments of the present application, S210 may include at least one of the following:
in a case that a first condition is satisfied, determining the target resource indication information based on a first information field according to the first resource unit; for example, interpreting an FDRA field according to a configuration of a current activated BWP, so as to determine whether the target indication information is valid or invalid; and
in a case that a second condition is satisfied, determining the target resource indication information based on the first information field according to the target resource unit or the first resource unit; for example, interpreting an FDRA field according to a configuration of an indicated target BWP, thereby determining whether the target resource indication information is valid or invalid.

In some embodiments, the first condition includes at least one of the following:
no object set information is configured;
no object combination information is configured; and
a first indication scheme is configured, activated, or configured to be used.

In some embodiments, the second condition includes at least one of the following:
object set information is configured;
object combination information is configured; and
the second indication scheme is configured, activated, or configured to be used.

In the embodiments of the present application, when "Z is configured " is described, it may mean at least Z is configured, or at least one Z is configured, or only Z is configured.

For example, "object set information is configured" may mean that at least object set information is configured, or that at least one piece of object set information is configured, or that only one piece of object set information is configured; "object combination information is configured" may mean that at least object combination information is configured, or that at least one piece of object combination information is configured, or that only one piece of object combination information is configured.

In the embodiments of the present application, "Y satisfying X is Z" may mean that Y satisfying X includes at least one Z, or includes only Z.

For example, when a first condition is satisfied, the terminal may determine target resource indication information based on a first BWP, or when a second condition is satisfied, the terminal may determine the target resource indication information based on a target BWP or the first BWP.

Optionally, the object combination information may include a list of scheduled cell combinations, such as ScheduledCellCombo-ListDCI-1-3, ScheduledCellCombo-ListDCI-0-3, or ScheduledCellCombo.

Optionally, the object set information may include a list of scheduled cell sets, such as ScheduledCellSet-ListDCI-1-3, or ScheduledCellSet-ListDCI-0-3/ScheduledCellSet.

Optionally, in a case that no object set information is configured or no object combination information is configured, it may be considered that the terminal is configured with, activates, or is configured to use a first indication scheme. Accordingly, the terminal may interpret the first information field based on the first BWP to determine the target resource indication information.

Optionally, when object set information is configured or object combination information is configured, it may be considered that the terminal is configured with, activates, or is configured to use a second indication scheme. Accordingly, the terminal may interpret the first information field based on the first BWP or the target BWP to determine the target resource indication information.

In some scenarios, the foregoing problem A may occur in some cases (considering all 1s as invalid values) in which padding with 0 changes invalid resource indication information into valid resource indication information, thereby causing the problem that the terminal fails to correctly determine the actual scheduling information, or causing the problem of inconsistent understanding of the actual scheduling information between the terminal and the network-side device.

In view of this, embodiments of the present application may adjust a padding manner for the first information field to avoid the foregoing problem A.

The following describes, with reference to Embodiment 2, a specific implementation of padding processing on the first information field.

### Embodiment 2

In some embodiments of the present application, the terminal may perform padding processing on the first information field based on the resource allocation type of the target resource unit, or an indication scheme configured, activated, or configured to be used on the terminal, for example, padding with 1 or 0. Further optionally, the terminal may determine the target resource indication information based on the padded first information field.

For example, when the number of bits of resource indication information required by the target BWP is greater than the number of bits of resource indication information required by the first BWP, or the bandwidth of the target BWP is greater than the bandwidth of the first BWP, or the frequency domain resources (for example, the number of RBs) of the target BWP are more than the frequency domain resources of the first BWP, padding processing is performed on the first information field based on the resource allocation type of the target resource unit, or the indication scheme configured, activated, or configured to be used on the terminal.

In some embodiments, Embodiment 2 may be combined with Embodiment 1. For example, when the terminal determines to interpret the first information field based on the target BWP to determine the target resource indication information according to embodiment 1, the terminal may determine a padding manner for the first information field according to Embodiment 2.

### Embodiment 2-1

In some embodiments, the terminal performing padding processing on the first information field based on the resource allocation type of the target resource unit, or an indication scheme configured, activated, or configured to be used on the terminal, includes at least one of the following padding manners:
Padding manner 1: in a case that the resource allocation type of the target resource unit is type 0 (type 0), padding the first information field with 0;
Padding manner 2: in a case that the resource allocation type of the target resource unit is type 1 (type 1), padding the first information field with 1;
Padding manner 3: in a case that the resource allocation type of the target resource unit is dynamic (dynamic) type, padding the first information field with 0 or 1, for example, preferably padding with 0;
Padding manner 4: in a case that the resource allocation type of the target resource unit is type 2 (type 2), and that the SCS of the target resource unit is the first SCS, padding the first information field with 0 or 1, for example, preferably padding with 0;
Padding manner 5: in a case that the resource allocation type of the target resource unit is type 2, and that the SCS of the target resource unit is a second SCS, padding the first information field with 1 or 0, for example, preferably padding with 1;
Padding manner 6: in a case that the first condition is satisfied, and that the resource allocation type of the target resource unit is type 0, dynamic type, or type 2 with the SCS of the target resource unit being the first SCS, padding the first information field with 0;
Padding manner 7: in a case that the first condition is satisfied, and that the resource allocation type of the target resource unit is type 1, dynamic type, or type 2 with the SCS of the target resource unit being the second SCS, padding the first information field with 1; and
Padding manner 8: in a case that the second condition is satisfied, padding the first information field with 0.

For specific implementations of the first condition and the second condition, reference may be made to the foregoing description, and for brevity, details are not repeated herein.

In some embodiments, the first SCS may be 30 kHz (or µ = 1), and the second SCS may be 15 kHz (or µ = 0).

In some embodiments, when the resource allocation type of the target resource unit is type0, dynamic, or type 2 with µ = 1, an all-zero first information field indicates invalid resource indication information. In this case, when the first information field is interpreted based on the target BWP, and padding processing needs to be performed on the first information field (that is, the number of bits of resource indication information required by the target BWP is greater than the number of bits of resource indication information required by a first BWP, or a bandwidth of the target BWP is greater than a bandwidth of the first BWP, or frequency domain resources of the target BWP are more than frequency domain resources of the first BWP), the first information field may be padded with 0. This avoids the problem that when the network-side device indicates invalid resource indication information, the terminal uses a padding manner of padding with 1, changing the invalid resource indication information into valid resource indication information, but the resource indication information cannot be actually used for scheduling, causing the problem of inconsistent understanding of the actual scheduling information between the network-side device and the terminal.

In other embodiments, when the resource allocation type of the target resource unit is type1, dynamic, or type 2 with µ = 0, an all-one first information field indicates invalid resource indication information. In this case, when the first information field is interpreted based on the target BWP, and padding processing needs to be performed on the first information field (that is, the number of bits of resource indication information required by the target BWP is greater than the number of bits of resource indication information required by a first BWP, or a bandwidth of the target BWP is greater than a bandwidth of the first BWP, or frequency domain resources of the target BWP are more than frequency domain resources of the first BWP), the first information field may be padded with 1. This avoids the problem that when the network-side device indicates invalid resource indication information, the terminal uses a padding manner of padding with 0, changing the invalid resource indication information into valid resource indication information, but the resource indication information cannot be actually used for scheduling, causing inconsistent understanding of the actual scheduling information between the network-side device and the terminal.

In some embodiments, when the first condition is satisfied, the terminal determines the target resource indication information based on the first information field, and further determines the scheduling information according to the target resource indication information. Therefore, the terminal may pad the first information field with 0 when the first condition is satisfied and the resource allocation type of the target resource unit is type0, dynamic, or type 2 with µ = 1, or pad the first information field with 1 when the first condition is satisfied and the resource allocation type of the target resource unit is type1, dynamic, or type 2 with µ = 0.

That is, in the embodiments of the present application, a padding value is related to a defined value of invalid resource indication information.

For example, when the defined value of the invalid resource indication information is all 0s, padding with 0 is performed; and when the defined value of the invalid resource indication information is all 1s, padding with 1 is performed. This avoids the problem that padding with a value inconsistent with the invalid value changes invalid resource indication information into valid resource indication information, thereby causing inconsistent understanding of the actual scheduling information between the network-side device and the terminal.

In some embodiments, when the second condition is satisfied, it may be considered that the terminal determines scheduling information based on object indication information (that is, using a second indication scheme). In this case, an existing padding scheme may not be adjusted, that is, when the first information field is interpreted based on the target BWP and padding processing on the first information field is required, the first information field may be padded with 0.

### Embodiment 2-2

In some embodiments of the present application, the terminal may also determine whether to perform padding processing on the first information field based on whether the resource indication information indicated by the first information field is invalid.

For example, when the number of bits of resource indication information required by the target BWP is greater than the number of bits of resource indication information required by the first BWP, or a bandwidth of the target BWP is greater than a bandwidth of the first BWP, or frequency domain resources (for example, the number of RBs) of the target BWP are more than frequency domain resources of the first BWP, the terminal may determine whether to perform padding processing on the first information field based on whether the resource indication information indicated by the first information field is invalid.

In an example, in a case that the resource indication information indicated by the first information field is invalid, it is determined not to perform padding processing on the first information field, and/or the target resource indication information is determined based on the first information field.

When the resource indication information indicated by the first information field is invalid, it may be considered that the network-side device does not schedule the target object, and therefore, the terminal may not process the first information field, or may determine the target resource indication information based on the first information field.

By way of example, when the resource allocation type of the target resource unit is type0, dynamic, or type 2 with µ = 1, in a case that the first information field is all 0s, it is determined that the resource indication information indicated by the first information field is invalid. In this case, the first information field may not be processed, and/or the invalid resource indication information may be directly used as the target resource indication information. When scheduling information is further determined according to the target resource indication information, it is determined that the target object is not scheduled.

By way of example, when the resource allocation type of the target resource unit is type1, dynamic, or type 2 with µ = 0, in a case that the first information field is all 1s, it is determined that the resource indication information indicated by the first information field is invalid. In this case, even if the number of bits of resource indication information required by the target BWP is greater than the number of bits of resource indication information required by the first BWP, or a bandwidth of the target BWP is greater than a bandwidth of the first BWP, or frequency domain resources (for example, the number of RBs) of the target BWP are more than frequency domain resources of the first BWP, the terminal may not perform padding processing on the first information field, and/or may directly use the invalid resource indication information as the target resource indication information. When scheduling information is further determined according to the target resource indication information, it is determined that the target object is not scheduled.

In another example, in a case that the first information field indicates valid resource indication information, the first information field is padded with 0 based on the target resource unit, and the target resource indication information is determined based on the padded first information field.

When the first information field indicates valid resource indication information, it may be determined that a value of the first information field is neither all 0s nor all 1s. In this case, padding the first information field with 0 is performed, and then the target resource indication information is determined based on the padded first information field. Thus, the problem of changing invalid resource indication information into valid resource indication information does not occur, thereby avoiding the foregoing problem A.

By way of example, when the resource allocation type of the target resource unit is type0, dynamic, or type 2 with µ = 1, in a case that the first information field is not all 0s, it is determined that the first information field indicates valid resource indication information. In this case, the first information field may be padded with 0. Further optionally, the target resource indication information is determined based on the padded first information field.

By way of example, when the resource allocation type of the target resource unit is type1, dynamic, or type 2 with µ = 0, in a case that the first information field is not all 1s, it is determined that the first information field indicates valid resource indication information. In this case, even if the number of bits of resource indication information required by the target BWP is greater than the number of bits of resource indication information required by the first BWP, or a bandwidth of the target BWP is greater than a bandwidth of the first BWP, or frequency domain resources (for example, the number of RBs) of the target BWP are more than frequency domain resources of the first BWP, the terminal may pad the first information field with 0. Further optionally, the target resource indication information is determined based on the padded first information field.

In some scenarios, the foregoing problem A may be caused by the network-side device indicating a target resource unit different from the current resource unit while also indicating invalid resource indication information.

In view of this, in the embodiments of the present application, constraints may be imposed on the indication manner of DCI to avoid the foregoing problem A.

The following describes, with reference to Embodiment 3, the indication manner of DCI.

### Embodiment 3

In Embodiment 3, DCI does not indicate invalid resource indication information and a resource unit different from a resource unit that is in use or activated, or it is not expected that DCI simultaneously indicates invalid resource indication information and a resource unit different from a resource unit that is in use or activated, thereby avoiding the foregoing problem A caused by padding processing on the first information field.

In some embodiments, the first information field and/or the target resource indication information is obtained via first DCI, the first DCI further includes resource unit indication information, and the resource unit indication information indicates the target resource unit. The first DCI does not indicate invalid resource indication information and a target resource unit different from the first resource unit simultaneously; or it is not expected that the first DCI simultaneously indicates invalid resource indication information and a target resource unit different from the first resource unit.

In some embodiments, that the first DCI does not indicate invalid resource indication information and a target resource unit different from the first resource unit simultaneously may mean that:
for the same object or for the target object, the first DCI does not indicate invalid resource indication information and a target resource unit different from the first resource unit simultaneously. For example, the first DCI cannot indicate a BWP different from the current BWP for a first cell and simultaneously indicate invalid resource indication information for the first cell.

Optionally, the first DCI may support indication of a BWP different from the current BWP to the second cell, and simultaneous indication of an invalid resource indication information to the first cell.

Optionally, that the target resource unit is different from the first resource unit may mean that:
the number of bits of resource indication information required by the target resource unit is different from the number of bits of resource indication information required by the first resource unit, for example, the number of bits of resource indication information required by the target resource unit is greater than the number of bits of resource indication information required by the first resource unit; or
a bandwidth of the target resource unit is different from a bandwidth of the first resource unit, for example, the bandwidth of the target resource unit is greater than the bandwidth of the first resource unit; or
frequency domain resources of the target resource unit are different from frequency domain resources of the first resource unit, for example, the frequency domain resources (for example, the number of RBs) of the target resource unit are more than the frequency domain resources of the first resource unit.

Optionally, when a second condition is satisfied, the constraint in Embodiment 3 is not applied to DCI.

The second condition includes at least one of the following:
object set information is configured;
object combination information is configured; and
the second indication scheme is configured, activated, or configured to be used.

That is, when the second condition is satisfied, Embodiment 3 is not applied.

Optionally, when the second condition is not satisfied, Embodiment 3 is applied, or in a case that the first condition is satisfied, Embodiment 3 is applied.

In some scenarios, the foregoing problem A occurs in some specific cases. For example, the terminal uses a first indication scheme, interprets the first information field according to a target resource unit, uses a padding manner of padding with 0, and the resource allocation type of the target resource unit is type 1, or type 2 with SCS being a second SCS. Accordingly, one design approach is to avoid the above problem A by constraining the indication scheme configured/activated/used by the terminal.

It should be understood that the indication scheme in the embodiments of the present application may be configured per object, for example, configured per scheduling cell (per scheduling cell), or may be configured at other granularities, such as per resource unit, for example, per BWP, per BWP combination, per codepoint of BWP indication information. In this way, when resource unit switching occurs, the terminal may switch to an indication scheme corresponding to the target resource unit. Thus, configuring an appropriate indication scheme for a target resource unit that may have a problem can resolve problem A.

The following describes, with reference to Embodiment 4, the selection of an indication scheme configured/activated/used by the terminal.

### Embodiment 4

In some embodiments of the present application, the method 200 further includes:
determining, by a terminal based on first information, an indication scheme to be configured/activated/used, and/or determining an indication scheme not to be configured/not to be activated/not to be used. For example, determining an indication scheme to be configured/activated/used between the first indication scheme and the second indication scheme, and/or determining the indication scheme not to be configured/not to be activated/not to be used.

In some embodiments, the first information includes, but is not limited to, at least one of the following:
a resource allocation type of at least one resource unit;
an SCS of at least one resource unit;
a resource size of at least one resource unit, such as bandwidth;
a number of resources of at least one resource unit, such as the number of RBs or carriers; and
the number of bits of resource indication information required by at least one resource unit.

In some embodiments, the at least one resource unit is a resource unit capable of being indicated by control signaling, for example, a resource unit capable of being scheduled or indicated by DCI, or a resource unit capable of being scheduled or indicated by resource unit indication information, where the resource unit indication information is used to indicate a resource unit for scheduling or indication.

For example, the at least one resource unit is at least one BWP, and the at least one BWP is a BWP capable of being indicated by control signaling, such as a BWP capable of being scheduled or indicated by DCI, or a BWP capable of being scheduled or indicated by BWP indication information.

In some embodiments, Embodiment 4 may apply a specific object, such as a specific cell, a specific cell combination, or a specific cell set, or may apply any object or all objects, such as all cells, all cell combinations, or all cell sets. Optionally, the specific object may be predefined or indicated by a network-side device.

### Embodiment 4-1

In some embodiments, the determining, by a terminal based on first information, an indication scheme to be configured/activated/used, and/or determining an indication scheme not to be configured/not to be activated/not to be used includes:
in a case that a third condition is satisfied, determining to configure/activate/use the second indication scheme, and/or determining not to configure/not to activate/not to use the first indication scheme; and/or
in a case that the third condition is not satisfied, determining to configure/activate/use the first indication scheme, and/or determining not to configure/not to activate/not to use the second indication scheme.

In the embodiments of the present application, when the third condition is satisfied, it may be considered that when the first information field is interpreted based on the target BWP, padding processing needs to be performed on the first information field. If padding with 0 is performed, the foregoing problem A may occur, affecting the interpretation of the actual scheduling information. In this case, the second indication scheme may be configured/activated/used, that is, scheduling information is determined based on object indication information. Optionally, in this case, the terminal may ignore the first information field, or ignore the padded first information field.

By way of example, the third condition includes, but is not limited to, at least one of the following:
the resource allocation type of the at least one resource unit includes at least one of type 1, dynamic type, and type 2 with the SCS being a second SCS;
a bandwidth of the at least one resource unit is larger than a bandwidth of at least one other resource unit, for example, the bandwidth of the at least one resource unit is larger than the bandwidth of all other resource units;
frequency domain resources of the at least one resource unit are more than frequency domain resources of at least one other resource unit, for example, the frequency domain resources of the at least one resource unit are more than the frequency domain resources of all other objects;
a bandwidth or frequency domain resources of the at least one resource unit are different from a bandwidth or frequency domain resources of at least one other resource unit, for example, the bandwidth or frequency domain resources of the at least one resource unit are different from the bandwidth or frequency domain resources of all other resource units;
the number of bits of resource indication information required by the at least one resource unit is greater than the number of bits of resource indication information required by at least one other resource unit, for example, the number of bits of resource indication information required by the at least one resource unit is greater than the number of bits of resource indication information required by all other resource units; and
the number of bits of resource indication information required by the at least one resource unit is different from the number of bits of resource indication information required by at least one other resource unit, for example, the number of bits of resource indication information required by the at least one resource unit is different from the number of bits of resource indication information required by all other resource units.

In some embodiments, the other resource units may refer to resource units configured on the terminal other than the at least one resource unit. Optionally, the at least one resource unit and the other resource units are associated with the same object, for example, associated with the same cell/cell combination/cell set.

In a specific example, the third condition includes that the resource allocation type of the at least one resource unit includes at least one of type 1, dynamic type, and type 2 with the SCS being the second SCS. In this case:
when the resource allocation type of the at least one resource unit includes at least one of type 1, dynamic type, and type 2 with the SCS being the second SCS, the terminal determines to configure/activate/use the second indication scheme, and/or determines not to configure/not to activate/not to use the first indication scheme; or
when the resource allocation type of at least one resource unit does not include any one of type 1, dynamic type, and type 2 with the SCS being the second SCS, the terminal determines to configure/activate/use the first indication scheme, and/or determines not to configure/not to activate/not to use the second indication scheme.

In another specific example, the third condition includes that the resource allocation type of the at least one resource unit includes at least one of type 1, dynamic type, and type 2 with the SCS being a second SCS, and that the number of bits of resource indication information required by the at least one resource unit is greater than the number of bits of resource indication information required by at least one other resource unit. In this case:
when the resource allocation type of the at least one resource unit includes at least one of type 1, dynamic type, and type 2 with the SCS being a second SCS, and the number of bits of resource indication information required by the at least one resource unit is greater than the number of bits of resource indication information required by other resource units, the terminal determines to configure/activate/use the second indication scheme, and/or determines not to configure/not to activate/not to use the first indication scheme; or
when the resource allocation type of at least one resource unit is not any one of type 1, dynamic type, and type 2 with the SCS being the second SCS, or the number of bits of resource indication information required by the at least one resource unit is less than the number of bits of resource indication information required by other resource units, the terminal determines to configure/activate/use the first indication scheme, and/or determines not to configure/not to activate/not to use the second indication scheme.

### Embodiment 4-2

In some embodiments, the determining, by a terminal based on first information, an indication scheme to be configured/activated/used, and/or determining an indication scheme not to be configured/not to be activated/not to be used includes:
in a case that a fourth condition is satisfied, determining to configure/activate/use the first indication scheme, and/or determining not to configure/not to activate/not to use the second indication scheme; and/or
in some embodiments, in a case that the fourth condition is not satisfied, determining to configure/activate/use the second indication scheme, and/or determining not to configure/not to activate/not to use the first indication scheme.

In the embodiments of the present application, when the fourth condition is satisfied, it may be considered that when the first information field is interpreted based on the target BWP, padding processing does not need to be performed on the first information field, or padding with 0 does not affect the meaning of the resource indication information, that is, the case in which invalid resource indication information changes into valid resource indication information does not occur. Therefore, the terminal may use the first indication scheme.

By way of example, the fourth condition includes, but is not limited to, at least one of the following:
the resource allocation type of the at least one resource unit includes at least one of type 0, dynamic type, and type 2 with the SCS of the target resource unit being the first SCS;
the bandwidth or frequency domain resources of the at least one resource unit are equal to the bandwidth or frequency domain resources of at least one other resource unit, for example, the bandwidth or frequency domain resources of the at least one resource unit are equal to the bandwidth or frequency domain resources of all other resource units; and
the number of bits of resource indication information required by the at least one resource unit is equal to the number of bits of resource indication information required by at least one other resource unit, for example, the bandwidth or frequency domain resources of the at least one resource unit are equal to the bandwidth or frequency domain resources of all other resource units.

In a specific example, the fourth condition includes that the resource allocation type of the at least one resource unit includes at least one of type 0, dynamic type, or type 2 with the SCS of the target resource unit being the first SCS. In this case:
when the resource allocation type of the at least one resource unit includes at least one of type 0, dynamic type, or type 2 with the SCS of the target resource unit being the first SCS, the terminal determines to configure/activate/use the first indication scheme, and/or determines not to configure/not to activate/not to use the second indication scheme; or
when the resource allocation type of at least one resource unit does not include any one of type 0, dynamic type, and type 2 with the SCS of the target resource unit being the first SCS, the terminal determines to configure/activate/use the second indication scheme, and/or determines not to configure/not to activate/not to use the first indication scheme.

In another specific example, the fourth condition includes that the resource allocation type of the at least one resource unit includes at least one of type 0, dynamic type, or type 2 with the SCS of the target resource unit being the first SCS, and that the number of bits of resource indication information required by the at least one resource unit is equal to the number of bits of resource indication information required by at least one other resource unit. In this case:
when the resource allocation type of the at least one resource unit includes at least one of type 0, dynamic type, or type 2 with the SCS of the target resource unit being the first SCS, and the number of bits of resource indication information required by the at least one resource unit is equal to the number of bits of resource indication information required by other resource units, the terminal determines to configure/activate/use the first indication scheme, and/or determines not to configure/not to activate/not to use the second indication scheme; or
when the resource allocation type of at least one resource unit does not include any one of type 0, dynamic type, or type 2 with the SCS of the target resource unit being the first SCS, or the number of bits of resource indication information required by the at least one resource unit is greater than the number of bits of resource indication information required by other resource units, the terminal determines to configure/activate/use the second indication scheme, and/or determines not to configure/not to activate/not to use the first indication scheme.

In some scenarios, the foregoing problem A occurs in some specific cases. For example, the terminal uses a first indication scheme, interprets the first information field based on the target resource unit, and uses a padding manner of padding with 0, and the first information field being all 1s indicates invalid resource indication information. Accordingly, one design approach is to avoid the above problem A by constraining a resource unit configuration on the terminal side.

The following describes, with reference to Embodiment 5, a resource unit configuration on the terminal side.

### Embodiment 5

In some embodiments, Embodiment 5 may apply a specific object, such as a specific cell, a specific cell combination, or a specific cell set, or may apply any object or all objects, such as all cells, all cell combinations, or all cell sets. Optionally, the specific object may be predefined or indicated by a network-side device.

### Embodiment 5-1

In some embodiments, at least one resource unit of the terminal satisfies at least one of the following:
when the at least one resource unit includes a plurality of resource units, resource allocation types of the plurality of resource units are the same; in this case, it may be considered that a determination manner for invalid resource indication information before and after resource unit switching is the same, that is, either all-zero values are considered invalid, or all-one values are considered invalid;
the resource allocation type of the at least one resource unit is a specific resource allocation type; in this case, it may be considered that a determination manner for invalid resource indication information before and after resource unit switching is the same, that is, either all-zero values are considered invalid, or all-one values are considered invalid;
the resource allocation type of the at least one resource unit includes at least one of dynamic type and type 0; in this case, it may be considered that a determination manner for invalid resource indication information before and after resource unit switching is the same, that is, all-zero values are considered invalid;
the resource allocation type of the at least one resource unit includes at least one of dynamic type, type 0, and type 2 with the SCS of the resource unit being the first SCS; in this case, it may be considered that a determination manner for invalid resource indication information before and after resource unit switching is the same, that is, all-zero values are considered invalid;
the resource allocation type of the at least one resource unit includes at least one of dynamic type and type 1; in this case, it may be considered that a determination manner for invalid resource indication information before and after resource unit switching is the same, that is, all-one values are considered invalid;
the resource allocation type of the at least one resource unit includes at least one of dynamic type, type 1, or type 2 with the SCS of the resource unit being the second SCS; in this case, it may be considered that a determination manner for invalid resource indication information before and after resource unit switching is the same, that is, all-one values are considered invalid;
the bandwidth or frequency domain resources of the at least one resource unit are equal to the bandwidth or frequency domain resources of at least one other resource unit, for example, the bandwidth or frequency domain resources of the at least one resource unit are equal to the bandwidth or frequency domain resources of all other resource units; in this case, it may be considered that padding processing does not need to be performed on the first information field after resource unit switching, and therefore problem A caused by padding with 0 does not occur;
the number of bits of resource indication information required by the at least one resource unit is equal to the number of bits of resource indication information required by at least one other resource unit, for example, the number of bits of resource indication information required by the at least one resource unit is equal to the number of bits of resource indication information required by all other resource units; in this case, it may be considered that padding processing does not need to be performed on the first information field after resource unit switching, and problem A caused by padding with 0 does not occur;
the bandwidth of the at least one resource unit is less than the bandwidth of at least one other resource unit (for example, the bandwidth of the at least one resource unit is less than the bandwidth of all other resource units), and the other resource unit is a resource unit incapable of being indicated by control signaling; in this case, it may be considered that the terminal does not switch to the at least one other resource unit, and therefore, even if the bandwidth of the at least one other resource unit is larger than the bandwidth of the at least one resource unit, padding processing does not need to be performed on the first information field based on the at least one other resource unit, and therefore, problem A caused by padding with 0 does not occur;
frequency domain resources of the at least one resource unit are less than frequency domain resources of at least one other resource unit (for example, the frequency domain resources of the at least one resource unit are less than the frequency domain resources of all other resource units), and the other resource unit is a resource unit incapable of being indicated by control signaling; in this case, it may be considered that the terminal does not switch to the at least one other resource unit, and therefore, even if the frequency domain resources of the at least one other resource unit are greater than the frequency domain resources of the at least one resource unit, padding processing does not need to be performed on the first information field based on the at least one other resource unit, and therefore, problem A caused by padding with 0 does not occur;
the number of bits of resource indication information required by the at least one resource unit is less than the number of bits of resource indication information required by at least one other resource unit (for example, the number of bits of resource indication information required by the at least one resource unit is less than the number of bits of resource indication information required by all other resource units), and the other resource unit is a resource unit incapable of being indicated by control signaling; in this case, it may be considered that the terminal does not switch to the at least one other resource unit, and therefore, even if the number of bits of resource indication information required by the at least one other resource unit is greater than the number of bits of resource indication information required by the at least one resource unit, padding processing does not need to be performed on the first information field based on the at least one other resource unit, and therefore, problem A caused by padding with 0 does not occur;
the terminal is not configured with a dormant resource unit or does not support dormancy, for example, all resource units of the terminal are not configured with dormancy or do not support dormancy;
the terminal is not configured with or does not support an enhanced hybrid automatic repeat request acknowledgement HARQ-ACK codebook, for example, all resource units of the terminal are not configured with dormancy or do not support an enhanced HARQ-ACK codebook;
the terminal is not configured with or does not support HARQ retransmission, for example, all resource units are not configured with or do not support HARQ retransmission; and
a resource allocation type of the at least one resource unit includes one of dynamic type, type 1, and type 2, for example, under the second indication scheme, the terminal determines scheduling information based on object indication information, and the foregoing problem A and problem B do not occur. Therefore, the resource unit may be configured with any resource allocation type.

In some embodiments, that the frequency domain resources of the at least one resource unit is less than the frequency domain resources of at least one other resource unit may include, but is not limited to: the number of RBs of the at least one resource unit is less than the number of RBs of at least one other resource unit. That the frequency domain resources of the at least one resource unit are equal to the frequency domain resources of at least one other resource unit may include, but is not limited to: the number of RBs of the at least one resource unit is equal to the number of RBs of at least one other resource unit.

In some embodiments, the at least one resource unit is a resource unit that can be indicated by control signaling, such as a resource unit capable of being scheduled or indicated by DCI, or a resource unit that capable of being scheduled or indicated by resource unit indication information, where the resource unit indication information is used to indicate a resource unit for scheduling or indication.

For example, the at least one resource unit is at least one BWP, and the at least one BWP is a BWP capable of being indicated by control signaling, such as a BWP capable of being scheduled or indicated by DCI, or a BWP capable of being scheduled or indicated by BWP indication information.

In some embodiments, the at least one resource unit is associated with the same object, for example, associated with a first object such as a first cell/first cell combination/first cell set.

In some embodiments, the other resource unit may be resource units other than the at least one resource unit among all resource units associated with the first object.

In some embodiments, that the other resource unit is a resource unit incapable of being indicated by control signaling may mean:
the other resource unit is incapable of being scheduled or indicated by DCI, or incapable of being indicated or scheduled by resource unit indication information.

All other resource units described in the embodiments of the present application may refer to all resource units other than the at least one resource unit among all resource units associated with the first object (that is, the object associated with the at least one resource unit), or all resource units incapable of being indicated by control signaling and associated with the first object.

When a resource unit is incapable of being indicated by control signaling, even if the number of bits of resource indication information required by the resource unit is more than the number of bits of resource indication information required by other resource units, the problem A caused by padding with 0 does not need to be considered since the terminal may not switch to the resource unit.

### Embodiment 5-2

In some embodiments, in a case that the second indication scheme is configured/activated/used, at least one resource unit of the terminal satisfies at least one of the following:
when the at least one resource unit includes a plurality of resource units, resource allocation types of the plurality of resource units are the same; in this case, it may be considered that a determination manner for invalid resource indication information before and after resource unit switching is the same, that is, either all-zero values are considered invalid, or all-one values are considered invalid;
the resource allocation type of the at least one resource unit is a specific resource allocation type; in this case, it may be considered that a determination manner for invalid resource indication information before and after resource unit switching is the same, that is, either all-zero values are considered invalid, or all-one values are considered invalid;
the resource allocation type of the at least one resource unit includes at least one of dynamic type and type 0; in this case, it may be considered that a determination manner for invalid resource indication information before and after resource unit switching is the same, that is, all-zero values are considered invalid;
the resource allocation type of the at least one resource unit includes at least one of dynamic type, type 0, and type 2 with the SCS of the resource unit being the first SCS; in this case, it may be considered that a determination manner for invalid resource indication information before and after resource unit switching is the same, that is, all-zero values are considered invalid;
the resource allocation type of the at least one resource unit includes at least one of dynamic type and type 1; in this case, it may be considered that a determination manner for invalid resource indication information before and after resource unit switching is the same, that is, all-one values are considered invalid;
the resource allocation type of the at least one resource unit includes at least one of dynamic type, type 1, or type 2 with the SCS of the resource unit being the second SCS; in this case, it may be considered that a determination manner for invalid resource indication information before and after resource unit switching is the same, that is, all-one values are considered invalid;
the bandwidth or frequency domain resources of the at least one resource unit are equal to the bandwidth or frequency domain resources of at least one other resource unit; in this case, it may be considered that padding processing does not need to be performed on the first information field after resource unit switching, and therefore problem A caused by padding with 0 does not occur;
the number of bits of resource indication information required by the at least one resource unit is equal to the number of bits of resource indication information required by at least one other resource unit (for example, the number of bits of resource indication information required by the at least one resource unit is equal to the number of bits of resource indication information required by all other resource units); in this case, it may be considered that padding processing does not need to be performed on the first information field after resource unit switching, and problem A caused by padding with 0 does not occur;
the bandwidth of the at least one resource unit is less than the bandwidth of at least one other resource unit (for example, the bandwidth of the at least one resource unit is less than the bandwidth of all other resource units), and the other resource unit is a resource unit incapable of being indicated by control signaling; in this case, it may be considered that the terminal does not switch to the at least one other resource unit, and therefore, even if the bandwidth of the at least one other resource unit is greater than the bandwidth of the at least one resource unit, padding processing does not need to be performed on the first information field based on the at least one other resource unit, and therefore, problem A caused by padding with 0 does not occur;
the frequency domain resources of the at least one resource unit are less than the frequency domain resources of at least one other resource unit (for example, the frequency domain resources of the at least one resource unit are less than the frequency domain resources of all other resource units), and the other resource unit is a resource unit incapable of being indicated by control signaling; in this case, it may be considered that the terminal does not switch to the at least one other resource unit, and therefore, even if the frequency domain resources of the at least one other resource unit are greater than the frequency domain resources of the at least one resource unit, padding processing does not need to be performed on the first information field based on the at least one other resource unit, and therefore, problem A caused by padding with 0 does not occur;
the number of bits of resource indication information required by the at least one resource unit is less than the number of bits of resource indication information required by at least one other resource unit (for example, the number of bits of resource indication information required by the at least one resource unit is less than the number of bits of resource indication information required by all other resource units), and the other resource unit is a resource unit incapable of being indicated by control signaling; in this case, it may be considered that the terminal does not switch to the at least one other resource unit, and therefore, even if the number of bits of resource indication information required by the at least one other resource unit is greater than the number of bits of resource indication information required by the at least one resource unit, padding processing does not need to be performed on the first information field based on the at least one other resource unit, and therefore, problem A caused by padding with 0 does not occur;
the terminal is not configured with a dormant resource unit or does not support dormancy, for example, all resource units of the terminal are not configured with dormancy or do not support dormancy;
the terminal is not configured with or does not support an enhanced hybrid automatic repeat request acknowledgement HARQ-ACK codebook, for example, all resource units of the terminal are not configured with dormancy or do not support an enhanced HARQ-ACK codebook;
the terminal is not configured with or does not support HARQ retransmission, for example, all resource units are not configured with or do not support HARQ retransmission; and
a resource allocation type of the at least one resource unit includes one of dynamic type, type 1, and type 2, for example, under the second indication scheme, the terminal determines scheduling information based on object indication information; in this case, the resource unit may be configured with any resource allocation type.

In Embodiment 5-1 and Embodiment 5-2, the resource allocation types of the at least one resource unit being the same includes at least one of the following:
the resource allocation types of the at least one resource unit are all type 0;
the resource allocation types of the at least one resource unit are all type 1;
the resource allocation types of the at least one resource unit are all type 2 with the SCS of the resource unit being the first SCS;
the resource allocation types of the at least one resource unit are all type 2 with the SCS of the resource unit being the second SCS; and
the resource allocation types of the at least one resource unit are all dynamic type.

In Embodiment 5-1 and Embodiment 5-2, the specific resource allocation type may include at least one of the following:
type 0;
type 1;
type 2 with the SCS of the resource unit being the first SCS;
type 2 with the SCS of the resource unit being the second SCS; and
dynamic type.

### Embodiment 5-3

In some embodiments, in a case that the first indication scheme is configured/activated/used, at least one resource unit of the terminal satisfies at least one of the following:
when the at least one resource unit includes a plurality of resource units, resource allocation types of the plurality of resource units are the same; in this case, it may be considered that a determination manner for invalid resource indication information before and after resource unit switching is the same, that is, all-one values or all-zero values are considered invalid;
the resource allocation type of the at least one resource unit is a specific resource allocation type. In this case, it may be considered that a determination manner for invalid resource indication information before and after resource unit switching is the same, that is, all-one values or all-zero values are considered invalid;
the resource allocation type of the at least one resource unit includes at least one of dynamic type and type 0; in this case, it may be considered that a determination manner for invalid resource indication information before and after resource unit switching is the same, that is, all-zero values are considered invalid;
the resource allocation type of the at least one resource unit includes at least one of dynamic type, type 0, or type 2 with the SCS of the resource unit being the first SCS; in this case, it may be considered that a determination manner for invalid resource indication information before and after resource unit switching is the same, that is, all-zero values are considered invalid;
the bandwidth or frequency domain resources of the at least one resource unit are equal to the bandwidth or frequency domain resources of at least one other resource unit (for example, the bandwidth or frequency domain resources of the at least one resource unit are equal to the bandwidth or frequency domain resources of all other resource units); in this case, it may be considered that padding processing is not performed on the first information field after resource unit switching, and problem A caused by padding with 0 does not occur;
the number of bits of resource indication information required by the at least one resource unit is equal to the number of bits of resource indication information required by at least one other resource unit (for example, the number of bits of resource indication information required by the at least one resource unit is equal to the number of bits of resource indication information required by all other resource units); in this case, it may be considered that padding processing does not need to be performed on the first information field after resource unit switching, and problem A caused by padding with 0 does not occur;
the bandwidth of the at least one resource unit is less than the bandwidth of at least one other resource unit (for example, the bandwidth of the at least one resource unit is less than the bandwidth of all other resource units), and the other resource unit is a resource unit incapable of being indicated by control signaling; in this case, it may be considered that the terminal does not switch to the at least one other resource unit, and therefore, even if the bandwidth of the at least one other resource unit is greater than the bandwidth of the at least one resource unit, padding processing does not need to be performed on the first information field based on the at least one other resource unit, and therefore, problem A caused by padding with 0 does not occur;
the frequency domain resources of the at least one resource unit are less than the frequency domain resources of at least one other resource unit (for example, the frequency domain resources of the at least one resource unit are less than the frequency domain resources of all other resource units), and the other resource unit is a resource unit incapable of being indicated by control signaling; in this case, it may be considered that the terminal does not switch to the at least one other resource unit, and therefore, even if the frequency domain resources of the at least one other resource unit are more than the frequency domain resources of the at least one resource unit, padding processing does not need to be performed on the first information field based on the at least one other resource unit, and therefore, problem A caused by padding with 0 does not occur;
the number of bits of resource indication information required by the at least one resource unit is less than the number of bits of resource indication information required by at least one other resource unit (for example, the number of bits of resource indication information required by the at least one resource unit is less than the number of bits of resource indication information required by all other resource units), and the other resource unit is a resource unit incapable of being indicated by control signaling; in this case, it may be considered that the terminal does not switch to the at least one other resource unit, and therefore, even if the number of bits of resource indication information required by the at least one other resource unit is greater than the number of bits of resource indication information required by the at least one resource unit, padding processing does not need to be performed on the first information field based on the at least one other resource unit, and therefore, problem A caused by padding with 0 does not occur;
the terminal is not configured with a dormant resource unit or does not support dormancy, for example, all resource units of the terminal are not configured with dormancy or do not support dormancy;
the terminal is not configured with or does not support an enhanced hybrid automatic repeat request acknowledgement HARQ-ACK codebook, for example, all resource units of the terminal are not configured with dormancy or do not support an enhanced HARQ-ACK codebook; and
the terminal is not configured with or does not support HARQ retransmission, for example, all resource units are not configured with or do not support HARQ retransmission.

In Embodiment 5-3, the resource allocation types of the at least one resource unit being the same includes at least one of the following:
the resource allocation types of the at least one resource unit are all type 0;
the resource allocation types of the at least one resource unit are all type 2 with the SCS of the resource unit being the first SCS; and
the resource allocation types of the at least one resource unit are all dynamic type.

In Embodiment 5-3, the specific resource allocation type may include at least one of the following:
type 0;
type 2 with the SCS of the resource unit being the first SCS; and
dynamic type.

In some scenarios, the foregoing problem A occurs in some specific cases. For example, the terminal uses the first indication scheme, interprets the first information field based on the target resource unit, and uses a padding manner of padding with 0, and the first information field being all 1s indicates invalid resource indication information. Accordingly, one design approach is to avoid the above problem A by constraining a resource unit switching manner on the terminal side.

The following describes, with reference to Embodiment 6, a resource unit switching manner on the terminal side.

### Embodiment 6

In Embodiment 6, interpreting the first information field based on the switched resource unit does not cause the foregoing problem A by imposing constraints on the resource unit switching.

In some embodiments, the target resource unit (that is, the switched resource unit) is not a specific resource unit, or the target resource unit is a resource unit other than the specific resource unit. That is, the network-side device does not instruct the terminal to switch to the specific resource unit, or the terminal is not expected to switch to the specific resource unit. When the target resource unit is the specific resource unit, that is, when the terminal switches to the specific resource unit, if the first information field is interpreted according to the specific resource unit, and padding with 0 is performed, the foregoing problem A may occur. Therefore, the foregoing problem A can be avoided by constraining the terminal not to switch to the specific resource unit during resource unit switching.

By way of example, the specific resource unit satisfies at least one of the following:
the specific resource unit is a resource unit with a specific identifier (for example, ID being 0);
an initial resource unit, such as an initial BWP;
a resource allocation type of the specific resource unit is type 1;
a resource allocation type of the specific resource unit is type 2 with an SCS of the specific resource unit being the second SCS;
a bandwidth of the specific resource unit is greater than the bandwidth of at least one other resource unit;
frequency domain resources of the specific resource unit are more than the frequency domain resources of at least one other resource unit;
a bandwidth or frequency domain resources of the specific resource unit are different from the bandwidth or frequency domain resources of at least one other resource unit;
the number of bits of resource indication information required by the specific resource unit is greater than the number of bits of resource indication information required by at least one other resource unit; and
the number of bits of resource indication information required by the specific resource unit is different from the number of bits of resource indication information required by at least one other resource unit.

In the above Embodiment 3 to Embodiment 6, the padding manner for the first information field may not be adjusted, and the existing padding manner, that is, padding with 0, may be used. The foregoing problem A can be avoided merely by imposing constraints on the indication scheme, DCI indication, resource unit configuration, and resource unit switching manner on the terminal side.

It should be understood that the above Embodiment 1 to Embodiment 6 may be implemented separately or in combination, and this is not limited in the present application. For example, the terminal may select to determine the resource unit used for the target resource indication information based on Embodiment 1, with the foregoing problem A being avoided through constraint conditions of at least one embodiment among Embodiment 3 to Embodiment 6.

In an example, for instance, the terminal determines the target resource indication information based on the target resource unit according to Embodiment 1, and may constrain the resource unit configuration of the terminal to satisfy the constraint conditions in Embodiment 5, or constrain the resource unit switching manner of the terminal to satisfy the constraint conditions in Embodiment 6, or the like.

Embodiment 7: The terminal interprets the first information field based on interpretation information to determine the target resource indication information.

In some embodiments of the present application, the method 900 further includes:
obtaining interpretation information of a first information field; and
interpreting the first information field based on the interpretation information of the first information field to obtain the target resource indication information.

In some embodiments, the interpretation information of the first information field is indicated by the network-side device, for example, indicated via DCI, RRC signaling, MAC CE, or other signaling, and this is not limited in the present application.

In some embodiments, the interpretation information of the first information field is used to indicate at least one of the following:
a value of the first information field corresponding to invalid resource indication information;
that the resource indication information indicated by the first information field is invalid;
that the first information field is used to indicate valid resource indication information or invalid resource indication information;
the padding value for padding the first information field; and
the interpretation manner of the first information field.

For example, the interpretation information may indicate that when the value of the padded first information field is a specific value (for example, 1100), it indicates invalid resource indication information. In this way, when the value of the first information field is 11, if it is determined based on the target resource unit that 00 needs to be padded, the value of the padded first information field is 1100, which may indicate invalid resource indication information, and the problem B described above does not occur.

In some embodiments, the interpretation information of the first information field may include first indication information (for example, 1 bit), and different values of the first indication information may be used to indicate that the first information field indicates valid or invalid resource indication information. For example, a value of 1 indicates that the first information field indicates valid resource indication information, and a value of 0 indicates that the resource indication information indicated by the first information field is invalid, or vice versa. In this case, it is not necessary to determine whether the resource indication information indicated by the first information field is invalid based on the value of the first information field.

In other embodiments, whether the resource indication information indicated by the first information field is invalid may be indicated based on whether the interpretation information of the first information field includes second indication information. Optionally, the second indication information may be 1 bit. For example, if the second indication information is included, it indicates that the resource indication information indicated by the first information field is invalid, otherwise it indicates that the first information field indicates valid resource indication information, or vice versa. In this case, it is not necessary to determine whether the resource indication information indicated by the first information field is invalid based on the value of the first information field.

In some embodiments, the interpretation information of the first information field may include third indication information used to indicate a padding value for padding the first information field, for example, indicating padding with 0 or padding with 1. Optionally, the third indication information may be 1 bit. For example, a value of 1 for the 1 bit indicates padding with 0, and a value of 0 indicates padding with 1, or vice versa. For example, when the resource allocation type of the target resource unit is type 0, dynamic type, or type 2 with the SCS being the first SCS, padding with 0 is indicated, and when the resource allocation type of the target resource unit is type 1, dynamic type, or type 2 with the SCS being the second SCS, padding with 1 is indicated.

In some embodiments, the interpretation manner of the first information field may include fourth indication information used to indicate that the target resource indication information is obtained by padding the first information field with 0 or 1. Optionally, the fourth indication information can be 1 bit. For example, a value of 1 for the 1 bit indicates that the target resource indication information is obtained by padding the first information field with 0, and a value of 0 indicates that the target resource indication information is obtained by padding the first information field with 1, or vice versa. For example, when the resource allocation type of the target resource unit is type 0, dynamic type, or type 2 with the SCS being the first SCS, it is indicated that the target resource indication information is obtained by padding the first information field with 0, and when the resource allocation type of the target resource unit is type 1, dynamic type, or type 2 with the SCS being the second SCS, it is indicated that the target resource indication information is obtained by padding the first information field with 1.

In some embodiments, the interpretation information of the first information field is obtained via at least one information field in second DCI. Optionally, the at least one information field may be an existing information field in the second DCI, or may be a newly added information field.

In an example, the interpretation information may be indicated via a new data indicator (New Data Indicator, NDI) field in the second DCI.

For example, a value of 1 or 0 of the NDI field respectively indicates that the first information field indicates valid or invalid resource indication information. For another example, a value of 1 or 0 of the NDI field respectively indicates padding with 1 or padding with 0. For a further example, a value of 1 or 0 of the NDI field respectively indicates that the target resource indication information is obtained by padding the first information field with 1 or by padding the first information field with 0, or vice versa.

For another example, toggling or non-toggling of the NDI respectively indicates that the first information field indicates valid or invalid resource indication information. For a further example, toggling or non-toggling of the NDI respectively indicates padding with 1 or padding with 0. For a yet further example, toggling or non-toggling of the NDI respectively indicates that the target resource indication information is obtained by padding the first information field with 1 or by padding the first information field with 0, or vice versa.

In some implementations, the interpretation information is indicated by at least part of bits (for example, all bits) of one information field. For example, all bits of the NDI field are used to indicate the interpretation information, or part of bits of a redundancy version (RV) field is used to indicate the interpretation information.

In other implementations, the interpretation information is jointly indicated by at least part of bits of at least one second information field and at least part of bits of at least one third information field. That is to say, at least part of bits of at least one second information field and at least part of bits of at least one third information field are jointly encoded to indicate the interpretation information. The second information field and the third information field may be existing information fields in DCI, or may be newly added information fields, where the second information field and the third information field are different information fields.

In some embodiments, the second DCI and the first DCI (that is, the DCI carrying the first information field) are the same DCI, or maybe different DCIs, and this is not limited in the present application.

In some embodiments, the second DCI is DCI for obtaining the target resource indication information.

In other embodiments, the second DCI is DCI carrying resource unit indication information, where the resource unit indication information is used to indicate the target resource unit.

In still other embodiments, the second DCI is DCI that indicates or triggers resource unit switching for at least one object, where the resource indication information corresponding to the at least one object is invalid.

### Embodiment 8

In Embodiment 8, the terminal may first interpret the first information field based on the first resource unit, and then determine whether to perform padding processing on the first information field based on the interpreted resource indication information, or determine, based on the interpreted resource indication information, whether to obtain the target resource indication information based on the target resource unit.

For example, first, the first information field is interpreted based on the first resource unit, and in a case that the first information field indicates valid resource indication information, padding or truncation processing is performed to the first information field based on the target resource unit, and the target resource indication information is determined based on the padded or truncated first information field.

For another example, first, the first information field is interpreted based on the first resource unit, and in a case that the resource indication information indicated by the first information field is invalid, no processing is performed on the first information field (or no padding or truncation processing is performed to the first information field based on the target resource unit), or in a case that the resource indication information indicated by the first information field is invalid, padding or truncation processing is performed to the first information field based on the target resource unit, without determining the scheduling information based on the padded or truncated first information field, or the padded or truncated first information field is ignored.

In some embodiments of the present application, the determining according to the target resource indication information that the target resource indication information is invalid includes, but is not limited to, at least one of the following manners:
Manner 1: when the target resource indication information is a specific value (for example, all 0s, or all 1s, or other values), determining that the target resource indication information is invalid;
Manner 2: when the resource allocation type of the target resource unit is type 0, dynamic type, or type 2 with SCS of the target resource unit being the first SCS, and N bits of the target resource indication information are all 0s, determining that the target resource indication information is invalid;
Manner 3: when the resource allocation type of the target resource unit is type 0, dynamic type, or type 2, and the SCS of the target resource unit is the first SCS, and the N bits of the target resource indication information are all 1s, determining that the target resource indication information is invalid, where the N bits are obtained by padding with 1;
Manner 4: when the resource allocation type of the target resource unit is type 1, dynamic type, or type 2 with the SCS of the target resource unit being the second SCS, and the N bits of the target resource indication information are all 1s, determining that the target resource indication information is invalid, where the N bits are obtained by padding with 1;
Manner 5: when the resource allocation type of the target resource unit is type 1, dynamic type, or type 2 with the SCS of the target resource unit being the second SCS, and N bits of the target resource indication information are all 0s, determining that the target resource indication information is invalid;
Manner 6: when the resource allocation type of the target resource unit is type 1, dynamic type, or type 2 with the SCS of the target resource unit being the second SCS, and M bits among the N bits of the target resource indication information are all 0s, determining that the target resource indication information is invalid; and
Manner 7: when the resource allocation type of the target resource unit is type 1, dynamic type, or type 2 with the SCS of the target resource unit being the second SCS, and M bits among the N bits of the target resource indication information are all 1s, determining that the target resource indication information is invalid.

In some embodiments, in a case that the target resource indication information is invalid, the terminal determines that the target object is not scheduled, and/or that a value corresponding to the target resource indication information does not correspond to scheduling information.

In some embodiments, the number of bits of resource indication information required by the first resource unit is M bits, and the number of bits of resource indication information required by the target resource unit is N bits. If N is greater than M, when the first information field is interpreted based on the target resource unit, the first information field may be padded with 0 or 1 to obtain N bits, and the target resource indication information is the N bits obtained by padding.

It should be understood that the above determination manners for invalidity of the resource indication information may be combined with the foregoing padding manner for the first information field.

For Manner 2 and Manner 5, the N bits of the target resource indication information may be obtained by padding with 0.

For Manner 6 and Manner 7, the M bits among the N bits of the target resource indication information may be the M bits of the first information field, that is, not including the padding bits. Therefore, Manner 6 and Manner 7 are equivalent to determining the target resource indication information based on the first resource unit. For example, for the resource allocation type in Manner 6, when the first information field is all 0s, it indicates that the target resource indication information is invalid; or for the resource allocation type in Manner 7, when the first information field is all 1s, it indicates that the target resource indication information is invalid.

Optionally, for Manner 7, the M bits are the least significant M bits among the N bits, and the most significant N - M bits may be 0; or the M bits are the most significant M bits among the N bits, and the least significant N - M bits may be 0.

In summary, the terminal may determine the target resource indication information according to a currently used/activated resource unit or the target resource unit, and further determine the scheduling information of the target object according to the target resource indication information.

In some implementations, the terminal may obtain the target resource indication information based on the first resource unit in a case that the first condition is satisfied, or obtain the target resource indication information based on the target resource unit or the first resource unit when the second condition is satisfied. This helps ensure the correctness of the target resource indication information determined by the terminal and the consistent understanding of the actual scheduling information between the terminal and the network-side device.

In some implementations, the terminal may adjust the padding manner for the first information field in which a problem may occur, so that the terminal may use an appropriate padding manner to pad the first information field. This helps ensure the correctness of the target resource indication information determined by the terminal and the consistent understanding of the actual scheduling information between the terminal and the network-side device.

In some implementations, the terminal may impose constraints on the indication manner in which DCI indicates a resource unit and resource indication information, that is, constraining the DCI from supporting simultaneous indication of invalid resource indication information and a target resource unit different from the first resource unit, thereby ensuring the correctness of the target resource indication information determined by the terminal based on the target resource unit and the consistent understanding of the actual scheduling information between the terminal and the network-side device.

In some implementations, constraints may be imposed on an indication scheme configured/activated/used in some cases in which a problem may occur, thereby ensuring the correctness of the target resource indication information determined by the terminal based on the target resource unit and the consistent understanding of the actual scheduling information between the terminal and the network-side device.

In some implementations, constraints may be imposed on a resource unit configuration on the terminal side, thereby ensuring the correctness of the target resource indication information determined by the terminal based on the target resource unit and the consistent understanding of the actual scheduling information between the terminal and the network-side device.

In some implementations, constraints may be imposed on a resource unit switching manner on the terminal side, thereby ensuring the correctness of the target resource indication information determined by the terminal based on the target resource unit and the consistent understanding of the actual scheduling information between the terminal and the network-side device.

In some implementations, the terminal may interpret the first information field based on additional interpretation information to determine the target resource indication information, thereby ensuring the correctness of the target resource indication information determined by the terminal and the consistent understanding of the actual scheduling information between the terminal and the network-side device.

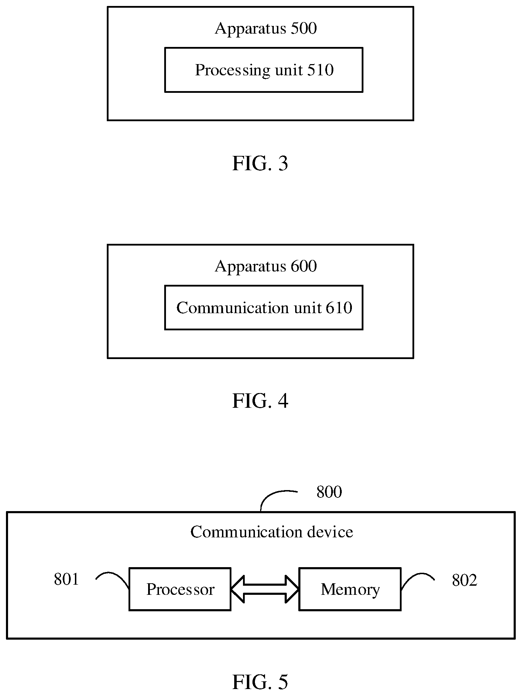

The method embodiments of the present application have been described in detail above with reference to FIG. 2. The following describes in detail apparatus embodiments of the present application with reference to FIG. 3 to FIG. 7. It should be understood that the apparatus embodiments correspond to the method embodiments, and for similar descriptions, reference may be made to the method embodiments.

The wireless communication method provided in the embodiments of the present application may be executed by a wireless communication apparatus. In the embodiments of the present application, a wireless communication apparatus performing the wireless communication method is used as an example to describe the wireless communication apparatus provided in the embodiments of the present application.

FIG. 3 is a schematic block diagram of a wireless communication apparatus 500 according to embodiments of the present application. As shown in FIG. 3, the apparatus 500 includes:
a processing unit 510, configured to determine target resource indication information according to a first resource unit or a target resource unit, where the first resource unit is a resource unit that is in use or activated, the target resource unit is a resource unit indicated by control signaling, and the target resource indication information is associated with a target object; and
determine at least one of the following according to the target resource indication information:
   that target resource indication information is valid;
   that the target resource indication information is invalid; or
   scheduling information of the target object.

In some embodiments, the processing unit 510 is configured to perform at least one of the following:
in a case that a first condition is satisfied, determining the target resource indication information based on a first information field according to the first resource unit; and
in a case that a second condition is satisfied, determining the target resource indication information based on the first information field according to the target resource unit or the first resource unit;
where the first condition includes at least one of the following:
   no object set information is configured;
   no object combination information is configured; and
   the first indication scheme is configured or activated, where the first indication scheme is an indication scheme based on resource indication information; and
   where the second condition includes at least one of the following:
      object set information is configured;
      object combination information is configured; and
      a second indication scheme is configured or activated, where the second indication scheme is an indication scheme based on object indication information.

In some embodiments, the processing unit 510 is further configured to:
pad a first information field with 1 or 0 based on a resource allocation type of the target resource unit, or based on an indication scheme that is configured or activated; and
determine the target resource indication information based on the padded first information field.

In some embodiments, the processing unit 510 is further configured to perform at least one of the following:
in a case that the resource allocation type of the target resource unit is type 0, padding the first information field with 0;
in a case that the resource allocation type of the target resource unit is type 1, padding the first information field with 1;
in a case that the resource allocation type of the target resource unit is dynamic type, padding the first information field with 0 or 1;
in a case that the resource allocation type of the target resource unit is type 2 with a subcarrier spacing SCS of the target resource unit being a first SCS, padding the first information field with 0 or 1;
in a case that the resource allocation type of the target resource unit is type 2 with an SCS of the target resource unit being a second SCS, padding the first information field with 1 or 0;
in a case that a first condition is satisfied, and that the resource allocation type of the target resource unit is type 0, dynamic type, or type 2 with the SCS of the target resource unit being a first SCS, padding the first information field with 0;
in a case that the first condition is satisfied, and that the resource allocation type of the target resource unit is type 1, dynamic type, or type 2 with the SCS of the target resource unit being the second SCS, padding the first information field with 1; and
in a case that the second condition is satisfied, padding the first information field with 0;
where the first condition includes at least one of the following:
   no object set information is configured;
   no object combination information is configured; and
   the first indication scheme is configured or activated, where the first indication scheme is an indication scheme based on resource indication information; and
   where the second condition includes at least one of the following:
      object set information is configured;
      object combination information is configured; and
      a second indication scheme is configured or activated, where the second indication scheme is an indication scheme based on object indication information.

In some embodiments, the processing unit 510 is further configured to:
in a case that the resource indication information indicated by the first information field is invalid, determine the target resource indication information based on the first information field; or
in a case that the first information field indicates valid resource indication information, pad the first information field with 0 based on the target resource unit, and determine the target resource indication information based on the padded first information field.

In some embodiments, the first information field and/or the target resource indication information is obtained via first DCI, the first DCI further includes resource unit indication information, and the resource unit indication information indicates the target resource unit.

In some embodiments, the first DCI does not indicate invalid resource indication information and a target resource unit different from the first resource unit simultaneously.

In some embodiments, the processing unit 510 is further configured to:
determine, based on first information, to use the first indication scheme or the second indication scheme, where the first indication scheme is an indication scheme based on resource indication information, and the second indication scheme is an indication scheme based on object indication information; where
the first information includes at least one of the following:
   a resource allocation type of at least one resource unit;
   an SCS of at least one resource unit;
   a resource size of at least one resource unit;
   a number of resources of at least one resource unit; and
   a number of bits of resource indication information required by at least one resource unit.

In some embodiments, the processing unit 510 is further configured to:
in a case that a third condition is satisfied, determine to use the second indication scheme, or determine not to use the first indication scheme, where the third condition includes at least one of the following:
the resource allocation type of the at least one resource unit is type 1, dynamic type, or type 2 with an SCS being the second SCS;
a bandwidth of the at least one resource unit is larger than a bandwidth of at least one other resource unit;
frequency domain resources of the at least one resource unit are more than frequency domain resources of at least one other resource unit;
a bandwidth or frequency domain resources of the at least one resource unit are different from a bandwidth or frequency domain resources of at least one other resource unit;
the number of bits of resource indication information required by the at least one resource unit is greater than the number of bits of resource indication information required by at least one other resource unit; and
the number of bits of resource indication information required by the at least one resource unit is different from the number of bits of resource indication information required by at least one other resource unit.

In some embodiments, the processing unit 510 is further configured to:
in a case that a fourth condition is satisfied, determine to use the first indication scheme, or determine not to use the second indication scheme, where the fourth condition includes at least one of the following:
the resource allocation type of the at least one resource unit is type 0, dynamic type, or type 2 with the SCS of the target resource unit being the first SCS;
a bandwidth or frequency domain resources of the at least one resource unit are equal to a bandwidth or frequency domain resources of at least one other resource unit; and
the number of bits of resource indication information required by the at least one resource unit is equal to the number of bits of resource indication information required by at least one other resource unit.

In some embodiments, at least one resource unit of the terminal satisfies at least one of the following, or in a case that the second indication scheme is configured or activated, at least one resource unit of the terminal satisfies at least one of the following:
when the at least one resource unit includes a plurality of resource units, resource allocation types of the plurality of resource units are the same;
the resource allocation type of the at least one resource unit is a specific resource allocation type;
the resource allocation type of the at least one resource unit includes at least one of dynamic type and type 0;
the resource allocation type of the at least one resource unit includes at least one of dynamic type, type 0, and type 2 with the SCS of the resource unit being the first SCS;
the resource allocation type of the at least one resource unit includes at least one of dynamic type and type 1;
the resource allocation type of the at least one resource unit includes at least one of dynamic type, type 1, or type 2 with the SCS of the resource unit being the second SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth of the at least one resource unit is less than the bandwidth of at least one other resource unit, and the other resource unit is a resource unit incapable of being indicated by control signaling;
the frequency domain resources of the at least one resource unit are less than the frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced hybrid automatic repeat request acknowledgement HARQ-ACK codebook;
the terminal is not configured with or does not support HARQ retransmission; and
the resource allocation type of the at least one resource unit includes one of dynamic type, type 1, and type 2.

In some embodiments, the resource allocation types of the at least one resource unit being the same includes at least one of the following:
the resource allocation types of the at least one resource unit are all type 0;
the resource allocation types of the at least one resource unit are all type 1;
the resource allocation types of the at least one resource unit are all type 2 with the SCS of the resource unit being the first SCS;
the resource allocation types of the at least one resource unit are all type 2 with the SCS of the resource unit being the second SCS; and
the resource allocation types of the at least one resource unit are all dynamic type.

In some embodiments, in a case that the first indication scheme is configured or activated, at least one resource unit of the terminal satisfies at least one of the following:
when the at least one resource unit includes a plurality of resource units, resource allocation types of the plurality of resource units are the same;
the resource allocation type of the at least one resource unit is a specific resource allocation type;
the resource allocation type of the at least one resource unit includes at least one of dynamic type and type 0;
the resource allocation type of the at least one resource unit includes at least one of dynamic type, type 0, or type 2 with the SCS of the resource unit being the first SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth or frequency domain resources of the at least one resource unit are less than the bandwidth or frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced HARQ-ACK codebook; and
the terminal is not configured with or does not support HARQ retransmission.

In some embodiments, the resource allocation types of the at least one resource unit being the same includes at least one of the following:
the resource allocation types of the at least one resource unit are all type 0;
the resource allocation types of the at least one resource unit are all type 2 with the SCS of the resource unit being the first SCS; and
the resource allocation types of the at least one resource unit are all dynamic type.

In some embodiments, the target resource unit does not include a specific resource unit, or the target resource unit includes a resource unit other than the specific resource unit, and the specific resource unit satisfies at least one of the following:
the specific resource unit is a resource unit with a specific identifier;
an initial resource unit;
a resource allocation type of the specific resource unit is type 1;
a resource allocation type of the specific resource unit is type 2 with an SCS of the specific resource unit being the second SCS;
a bandwidth of the specific resource unit is greater than the bandwidth of at least one other resource unit;
the frequency domain resources of the specific resource unit are more than the frequency domain resources of at least one other resource unit;
the bandwidth or frequency domain resources of the specific resource unit are different from the bandwidth or frequency domain resources of at least one other resource unit;
the number of bits of resource indication information required by the specific resource unit is greater than the number of bits of resource indication information required by at least one other resource unit; and
the number of bits of resource indication information required by the specific resource unit is different from the number of bits of resource indication information required by at least one other resource unit.

In some embodiments, the processing unit 510 is further configured to:
obtain interpretation information of the first information field; and
interpret the first information field based on the interpretation information of the first information field to obtain the target resource indication information.

In some embodiments, the interpretation information of the first information field is used to indicate at least one of the following:
a value of the first information field corresponding to invalid resource indication information;
that the resource indication information indicated by the first information field is invalid;
that the first information field is used to indicate valid resource indication information or invalid resource indication information;
a padding value for padding the first information field; and
an interpretation manner of the first information field.

In some embodiments, the interpretation information of the first information field is obtained via at least one information field in second DCI.

In some embodiments, the second DCI is DCI for obtaining the target resource indication information; or
the second DCI is DCI carrying resource unit indication information, where the resource unit indication information is used to indicate the target resource unit; or
the second DCI is DCI that indicates or triggers resource unit switching for at least one object, where the resource indication information corresponding to the at least one object is invalid.

In some embodiments, the processing unit 510 is further configured to:
in a case that the first information field indicates valid resource indication information, perform padding or truncation processing to the first information field based on the target resource unit, and determine the target resource indication information based on the padded or truncated first information field; or
in a case that the resource indication information indicated by the first information field is invalid, perform no processing on the first information field, or in a case that the resource indication information indicated by the first information field is invalid, perform padding or truncation processing to the first information field based on the target resource unit, without determining the scheduling information based on the padded or truncated first information field.

In some embodiments, the processing unit 510 is further configured to perform at least one of the following:
when the target resource indication information is a specific value, determining that the target resource indication information is invalid;
when the resource allocation type of the target resource unit is type 0, dynamic type, or type 2 with the SCS of the target resource unit being the first SCS, and N bits of the target resource indication information are all 0s, determining that the target resource indication information is invalid;
when the resource allocation type of the target resource unit is type 0, dynamic type, or type 2, the SCS of the target resource unit is the first SCS, and N bits of the target resource indication information are all 1s, determining that the target resource indication information is invalid, where the N bits are obtained by padding with 1;
when the resource allocation type of the target resource unit is type 1, dynamic type, or type 2 with the SCS of the target resource unit being the second SCS, and N bits of the target resource indication information are all 1s, determining that the target resource indication information is invalid, where the N bits are obtained by padding with 1;
when the resource allocation type of the target resource unit is type 1, dynamic type, or type 2, the SCS of the target resource unit is the second SCS, and N bits of the target resource indication information are all 0s, determining that the target resource indication information is invalid;
when the resource allocation type of the target resource unit is type 1, dynamic type, or type 2 with the SCS of the target resource unit being the second SCS, and M bits among N bits of the target resource indication information are all 0s, determining that the target resource indication information is invalid; and
when the resource allocation type of the target resource unit is type 1, dynamic type, or type 2 with the SCS of the target resource unit being the second SCS, and M bits among N bits of the target resource indication information are all 1s, determining that the target resource indication information is invalid.

Optionally, in some embodiments, the above communication unit may be a communication interface or transceiver, or a communication chip or input/output interface of a system on chip.

It should be understood that the apparatus 500 according to the embodiments of the present application may correspond to the terminal in the method embodiments of the present application, and the above and other operations and/or functions of units in the apparatus 500 are respectively for implementing corresponding processes in the method embodiment shown in FIG. 2, with the same technical effects achieved. To avoid repetition, details are not repeated herein.

FIG. 4 is a schematic block diagram of a wireless communication apparatus 600 according to embodiments of the present application. As shown in FIG. 4, the apparatus 600 includes:
a communication unit 610, configured to indicate target resource indication information to a terminal, where the target resource indication information is associated with a target object, and the target resource indication information is used to determine at least one of the following: that target resource indication information is valid; that the target resource indication information is invalid; or scheduling information of the target object.

In some embodiments, at least one resource unit of the terminal is configured to satisfy at least one of the following, or in a case that a second indication scheme is configured or activated, at least one resource unit of the terminal is configured to satisfy at least one of the following:
when the at least one resource unit includes a plurality of resource units, resource allocation types of the plurality of resource units are the same;
the resource allocation type of the at least one resource unit is a specific resource allocation type;
the resource allocation type of the at least one resource unit includes at least one of dynamic type and type 0;
the resource allocation type of the at least one resource unit includes at least one of dynamic type, type 0, and type 2 with the SCS of the resource unit being the first SCS;
the resource allocation type of the at least one resource unit includes at least one of dynamic type and type 1;
the resource allocation type of the at least one resource unit includes at least one of dynamic type, type 1, or type 2 with the SCS of the resource unit being the second SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth of the at least one resource unit is less than the bandwidth of at least one other resource unit, and the other resource unit is a resource unit incapable of being indicated by control signaling;
the frequency domain resources of the at least one resource unit are less than the frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced hybrid automatic repeat request acknowledgement HARQ-ACK codebook;
the terminal is not configured with or does not support HARQ retransmission; and
the resource allocation type of the at least one resource unit includes one of dynamic type, type 1, and type 2.

In some embodiments, the resource allocation types of the at least one resource unit being the same includes at least one of the following:
the resource allocation types of the at least one resource unit are all type 0;
the resource allocation types of the at least one resource unit are all type 1;
the resource allocation types of the at least one resource unit are all type 2 with the SCS of the resource unit being the first SCS;
the resource allocation types of the at least one resource unit are all type 2 with the SCS of the resource unit being the second SCS; and
the resource allocation types of the at least one resource unit are all dynamic type.

In some embodiments, when the first indication scheme is configured or activated, at least one resource unit of the terminal is configured to satisfy at least one of the following:
when the at least one resource unit includes a plurality of resource units, resource allocation types of the plurality of resource units are the same;
the resource allocation type of the at least one resource unit is a specific resource allocation type;
the resource allocation type of the at least one resource unit includes at least one of dynamic type and type 0;
the resource allocation type of the at least one resource unit includes at least one of dynamic type, type 0, or type 2 with the SCS of the resource unit being the first SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth or frequency domain resources of the at least one resource unit are less than the bandwidth or frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced HARQ-ACK codebook; and
the terminal is not configured with or does not support HARQ retransmission.

In some embodiments, the resource allocation types of the at least one resource unit being the same includes at least one of the following:
the resource allocation types of the at least one resource unit are all type 0;
the resource allocation types of the at least one resource unit are all type 2 with the SCS of the resource unit being the first SCS; and
the resource allocation types of the at least one resource unit are all dynamic type.

In some embodiments, the target resource unit is indicated by a network-side device, the target resource unit does not include a specific resource unit, or the target resource unit includes a resource unit other than the specific resource unit, and the specific resource unit satisfies at least one of the following:
the specific resource unit is a resource unit with a specific identifier;
an initial resource unit;
a resource allocation type of the specific resource unit is type 1;
a resource allocation type of the specific resource unit is type 2 with an SCS of the specific resource unit being the second SCS;
a bandwidth of the specific resource unit is greater than the bandwidth of at least one other resource unit;
frequency domain resources of the specific resource unit are more than the frequency domain resources of at least one other resource unit;
a bandwidth or frequency domain resources of the specific resource unit are different from the bandwidth or frequency domain resources of at least one other resource unit;
the number of bits of resource indication information required by the specific resource unit is greater than the number of bits of resource indication information required by at least one other resource unit; and
the number of bits of resource indication information required by the specific resource unit is different from the number of bits of resource indication information required by at least one other resource unit.

In some embodiments, the communication unit 610 is further configured to:
send interpretation information of a first information field to a terminal.

In some embodiments, the interpretation information of the first information field is used to indicate at least one of the following:
a value of the first information field corresponding to invalid resource indication information;
that the resource indication information indicated by the first information field is invalid;
that the first information field is used to indicate valid resource indication information or invalid resource indication information;
a padding value for padding the first information field; and
an interpretation manner of the first information field.

Optionally, in some embodiments, the communication unit may be a communication interface or a transceiver, or a communication chip or an input/output interface of a system on chip.

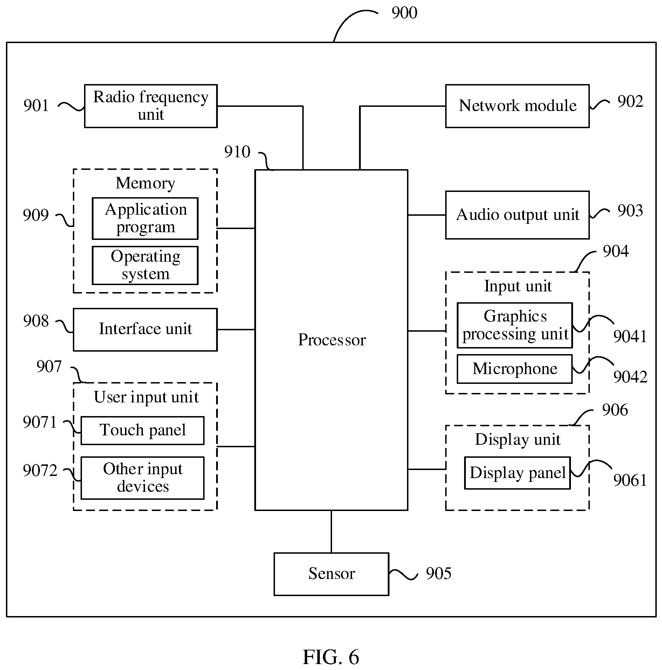

It should be understood that the wireless communication apparatus 600 according to the embodiments of the present application may correspond to the network-side device in the method embodiments of the present application, and the above and other operations and/or functions of units in the apparatus 600 are respectively for implementing corresponding processes of the network-side device in the method embodiment shown in FIG. 6, with the same technical effects achieved. To avoid repetition, details are not repeated herein.

In some embodiments, the apparatus 500 and the apparatus 600 in the embodiments of the present application may be electronic devices, such as electronic devices with an operating system, or may be components in electronic devices, such as integrated circuits or chips. The electronic device may be a terminal, or may be a device other than a terminal. By way of example, the terminal may include, but is not limited to, the types of the terminal 11 listed above, and the other device may be a server, a network attached storage (Network Attached Storage, NAS), or the like, and this is not specifically limited in the embodiments of the present application.

As shown in FIG. 5, embodiments of the present application further provide a communication device 800, including a processor 801 and a memory 802, where a program or an instruction executable on the processor 801 is stored in the memory 802. For example, when the communication device 800 is a terminal, the program or instruction, when executed by the processor 801, implements the steps performed by the terminal in the above wireless communication method embodiments, with the same technical effects achieved. When the communication device 800 is a network-side device, the program or instruction, when executed by the processor 801, implements the steps performed by the network-side device in the above wireless communication method embodiments, with the same technical effects achieved. To avoid repetition, details are not repeated herein.

Embodiments of the present application further provide a terminal, including a processor and a communication interface, the communication interface being coupled to the processor, the processor being used for running a program or instructions to implement the steps in the method embodiment shown in FIG. 2. This terminal embodiment corresponds to the above terminal-side method embodiment, and various implementation processes and implementations of the above method embodiment can all be applied to this terminal embodiment, with the same technical effects achieved. Specifically, FIG. 6 is a schematic diagram of a hardware structure of a terminal implementing embodiments of the present application.

The terminal 900 includes, but is not limited to, at least some of the components such as a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the terminal 900 may also include a power supply (for example, a battery) for supplying power to various components, and the power supply may be logically connected to the processor 910 through a power management system, thereby implementing functions such as charging, discharging, and power consumption management through the power management system. The structure of the terminal shown in FIG. 6 does not constitute a limitation on the terminal. The terminal may include more or fewer components than shown, or combine certain components, or have different component arrangements. Details are not described herein.

It should be understood that, in the embodiments of the present application, the input unit 904 may include a graphics processing unit (Graphics Processing Unit, GPU) 9041 and a microphone 9042. The graphics processing unit 9041 is configured to process image data of still pictures or videos obtained by an image capture apparatus (for example, a camera) in a video capture mode or an image capture mode. The display unit 906 may include a display panel 9061, and the display panel 9061 may be configured in the form of a liquid crystal display, an organic light-emitting diode, or the like. The user input unit 907 includes at least one of a touch panel 9071 and other input devices 9072. The touch panel 9071 is also referred to as a touch screen. The touch panel 9071 may include two parts: a touch detection apparatus and a touch controller. The other input devices 9072 may include, but are not limited to, a physical keyboard, a function key (for example, a volume control key or a power on/off key), a trackball, a mouse, and a joystick. Details are not described herein.

In the embodiments of the present application, after receiving downlink data from a network-side device, the radio frequency unit 901 may transmit the downlink data to the processor 910 for processing; in addition, the radio frequency unit 901 may send uplink data to the network-side device. Generally, the radio frequency unit 901 includes, but is not limited to, an antenna, an amplifier, a transceiver, a coupler, a low noise amplifier, and a duplexer.

The memory 909 may be configured to store a software program or instruction and various data. The memory 909 may mainly include a first storage area for storing a program or an instruction and a second storage area for storing data, where the first storage area may store an operating system, an application program. or an instruction required for at least one function (such as a sound playback function or an image playback function), and the like. In addition, the memory 909 may include volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in the embodiments of the present application includes, but is not limited to, these and any other suitable types of memory.

The processor 910 may include one or more processing units. Optionally, the processor 910 integrates an application processor and a modem processor. The application processor primarily processes operations involving an operating system, a user interface, an application program, or the like. The modem processor mainly processes radio communication signals, for example, being a baseband processor. It can be understood that the above modem processor may not be integrated into the processor 910.

In some embodiments, the processor 910 is configured to determine target resource indication information according to a first resource unit or a target resource unit, where the first resource unit includes a resource unit that is in use or activated, the target resource unit is a resource unit indicated by control signaling, and the target resource indication information is associated with a target object; and
determine at least one of the following according to the target resource indication information: that target resource indication information is valid; that the target resource indication information is invalid; or scheduling information of the target object.

It can be understood that for the implementation processes of the implementations mentioned in the embodiments, reference may be made to the relevant descriptions of the terminal in the method embodiments, with the same or corresponding technical effects achieved. To avoid repetition, details are not repeated herein.

Embodiments of the present application further provide a network-side device, including a processor and a communication interface. The communication interface is coupled to the processor, and the processor is configured to run a program or an instruction to implement the steps of the method embodiment shown in FIG. 2. The network-side device embodiments correspond to the above network-side device method embodiments, and the implementation processes and implementations of the above method embodiments may all be applied to the network-side device embodiments, with the same technical effects achieved.

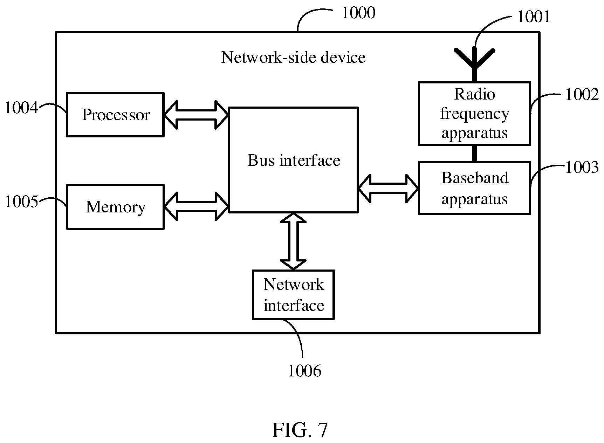

Specifically, embodiments of the present application further provide a network-side device. As shown in FIG. 7, the network-side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information via the antenna 1001 and sends the received information to the baseband apparatus 1003 for processing. In a downlink direction, the baseband apparatus 1003 processes the information that needs to be sent and sends processed information to the radio frequency apparatus 1002, and the radio frequency apparatus 1002 processes the received information and sends processed information out via the antenna 1001.

The method executed by the network-side device in the above embodiments may be implemented in the baseband apparatus 1003, and the baseband apparatus 1003 includes a baseband processor.

The baseband apparatus 1003 may include, for example, at least one baseband board on which a plurality of chips are provided. As shown in FIG. 7, one chip is, for example, a baseband processor, which is connected to the memory 1005 through a bus interface to invoke a program in the memory 1005 and perform operations of the network-side device shown in the above method embodiments.

The network-side device may further include a network interface 1006, such as a common public radio interface (Common Public Radio Interface, CPRI).

In some embodiments, the network-side device 1000 in the embodiments of the present application further includes an instruction or a program stored on the memory 1005 and executable on the processor 1004. The processor 1004 invokes the instruction or program in the memory 1005 to perform the steps performed by the network-side device in the method embodiment shown in FIG. 2, with the same technical effects achieved. To avoid repetition, details are not repeated herein.

Embodiments of the present application further provide a readable storage medium on which a program or an instruction is stored. When the program or instruction is executed by a processor, the processes of the method embodiment in FIG. 2 are implemented, with the same technical effects achieved. To avoid repetition, details are not repeated herein.

The processor is a processor in the terminal or network-side device described in the above embodiments. The readable storage medium includes a computer-readable storage medium such as a computer read-only memory ROM, a random access memory RAM, a magnetic disk, or an optical disk. In some examples, the readable storage medium may be a non-transitory readable storage medium.

Embodiments of the present application further provide a chip, where the chip includes a processor and a communication interface, the communication interface is coupled to the processor, and the processor is configured to run a program or an instruction to implement the processes of the method embodiment in FIG. 2, with the same technical effects achieved. To avoid repetition, details are not repeated herein.

It should be understood that the chip mentioned in the embodiments of the present application may alternatively be referred to as a system-level chip, a system chip, a chip system, or a system on chip.

Embodiments of the present application further provide a computer program/program product, where the computer program/program product is stored in a storage medium, and the computer program/program product is executed by at least one processor to implement the processes of the method embodiments in FIG. 3 to FIG. 7, with the same technical effects achieved. To avoid repetition, details are not repeated herein.

Embodiments of the present application further provide a communication system including a terminal and a network-side device, where the terminal is configured to perform the steps performed by the terminal in the wireless communication method described above, and the network-side device is configured to perform the steps performed by the network-side device in the wireless communication method described above.

It should be noted that, in this specification, the terms "include", "comprise" or any other variant thereof are intended to cover non-exclusive inclusion, so that a process, method, article, or apparatus including a series of elements not only includes those elements, but also includes other elements not explicitly listed, or also includes elements inherent to such process, method, article, or apparatus. Without more restrictions, an element defined by the statement "including one ..." does not exclude the existence of another identical element in the process, method, article or apparatus including the element. In addition, it should be noted that the scope of the methods and apparatuses in the implementations of the present application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the description of the above implementations, those skilled in the art can clearly learn that the above embodiment methods may be implemented by means of a computer software product plus a necessary universal hardware platform, or by hardware. The computer software product is stored in a storage medium (for example, a ROM, a RAM, a magnetic disk, or an optical disk), including several instructions to make a terminal or network-side device execute the methods described in the embodiments of the present application.

The embodiments of the present application have been described above with reference to the accompanying drawings, but the present application is not limited to the above specific implementations. The above specific implementations are merely illustrative rather than restrictive. Under the enlightenment of the present application, those of ordinary skill in the art can make many forms of implementations without departing from the purpose and scope of protection of the present application and the claims, and these implementations all fall within the protection of the present application.

## Claims

1. A wireless communication method, comprising:
determining, by a terminal, target resource indication information according to a first resource unit or a target resource unit, wherein the first resource unit comprises a resource unit that is in use or activated, the target resource unit is a resource unit indicated by control signaling, and the target resource indication information is associated with a target object; and
determining at least one of the following according to the target resource indication information:
that target resource indication information is valid; that the target resource indication information is invalid; or scheduling information of the target object.

2. The method according to claim 1, wherein the determining, by a terminal, target resource indication information according to a first resource unit or a target resource unit comprises at least one of the following:
in a case that a first condition is satisfied, determining the target resource indication information based on a first information field according to the first resource unit; and
in a case that a second condition is satisfied, determining the target resource indication information based on the first information field according to the target resource unit or the first resource unit;
wherein the first condition comprises at least one of the following:
no object set information is configured;
no object combination information is configured; and
a first indication scheme is configured or activated, wherein the first indication scheme is an indication scheme based on resource indication information; and
wherein the second condition comprises at least one of the following:
object set information is configured;
object combination information is configured; and
a second indication scheme is configured or activated, wherein the second indication scheme is an indication scheme based on object indication information.

3. The method according to claim 1 or 2, wherein the determining, by a terminal, target resource indication information based on a first resource unit or a target resource unit comprises:
padding a first information field with 1 or 0 based on a resource allocation type of the target resource unit, or based on an indication scheme that is configured or activated; and
determining the target resource indication information based on the padded first information field.

4. The method according to claim 3, wherein the padding a first information field with 1 or 0 based on a resource allocation type of the target resource unit, or based on an indication scheme that is configured or activated comprises at least one of the following:
in a case that the resource allocation type of the target resource unit is type 0, padding the first information field with 0;
in a case that the resource allocation type of the target resource unit is type 1, padding the first information field with 1;
in a case that the resource allocation type of the target resource unit is dynamic type, padding the first information field with 0 or 1;
in a case that the resource allocation type of the target resource unit is type 2 with a subcarrier spacing SCS of the target resource unit being a first SCS, padding the first information field with 0 or 1;
in a case that the resource allocation type of the target resource unit is type 2 with an SCS of the target resource unit being a second SCS, padding the first information field with 1 or 0;
in a case that a first condition is satisfied, and that the resource allocation type of the target resource unit is type 0, dynamic type, or type 2 with the SCS of the target resource unit being a first SCS, padding the first information field with 0;
in a case that a first condition is satisfied, and that the resource allocation type of the target resource unit is type 1, dynamic type, or type 2 with the SCS of the target resource unit being the second SCS, padding the first information field with 1; and
in a case that a second condition is satisfied, padding the first information field with 0;
wherein the first condition comprises at least one of the following:
no object set information is configured;
no object combination information is configured; and
a first indication scheme is configured or activated, wherein the first indication scheme is an indication scheme based on resource indication information; and
wherein the second condition comprises at least one of the following:
object set information is configured;
object combination information is configured; and
a second indication scheme is configured or activated, wherein the second indication scheme is an indication scheme based on object indication information.

5. The method according to claim 1 or 2, wherein the determining, by a terminal, target resource indication information based on a first resource unit or a target resource unit comprises:
in a case that the resource indication information indicated by the first information field is invalid, determining the target resource indication information based on the first information field; or
in a case that the first information field indicates valid resource indication information, padding the first information field with 0 based on the target resource unit, and determining the target resource indication information based on the padded first information field.

6. The method according to any one of claims 2 to 5, wherein the first information field or the target resource indication information is obtained via first DCI, the first DCI further comprises resource unit indication information, and the resource unit indication information indicates the target resource unit; wherein the resource unit indication information comprises a bandwidth part BWP indication, and the target resource indication information comprises frequency domain resource assignment FDRA information.

7. The method according to claim 6, wherein the first DCI does not indicate invalid resource indication information and a target resource unit different from the first resource unit simultaneously.

8. The method according to any one of claims 1 to 7, wherein the method further comprises:
determining, by the terminal based on first information, to use the first indication scheme or the second indication scheme, wherein the first indication scheme is an indication scheme based on resource indication information, and the second indication scheme is an indication scheme based on object indication information; wherein
the first information comprises at least one of the following:
a resource allocation type of at least one resource unit;
an SCS of at least one resource unit;
a resource size of at least one resource unit;
a number of resources of at least one resource unit; and
a number of bits of resource indication information required by at least one resource unit.

9. The method according to claim 8, wherein the determining, by the terminal based on first information, to use the first indication scheme or the second indication scheme comprises:
in a case that a third condition is satisfied, determining to use the second indication scheme, or determining not to use the first indication scheme, wherein the third condition comprises at least one of the following:
the resource allocation type of the at least one resource unit comprises at least one of type 1, dynamic type, and type 2 with the SCS being the second SCS;
a bandwidth of the at least one resource unit is larger than a bandwidth of at least one other resource unit;
frequency domain resources of the at least one resource unit are more than frequency domain resources of at least one other resource unit;
a bandwidth or frequency domain resources of the at least one resource unit are different from a bandwidth or frequency domain resources of at least one other resource unit;
the number of bits of resource indication information required by the at least one resource unit is greater than a number of bits of resource indication information required by at least one other resource unit; and
the number of bits of resource indication information required by the at least one resource unit is different from a number of bits of resource indication information required by at least one other resource unit.

10. The method according to claim 8, wherein the determining, by the terminal based on first information, to use the first indication scheme or the second indication scheme comprises:
in a case that a fourth condition is satisfied, determining to use the first indication scheme, or determining not to use the second indication scheme, wherein the fourth condition comprises at least one of the following:
the resource allocation type of the at least one resource unit comprises at least one of type 0, dynamic type, and type 2 with the SCS of the target resource unit being the first SCS;
a bandwidth or frequency domain resources of the at least one resource unit are equal to a bandwidth or frequency domain resources of at least one other resource unit; and
the number of bits of resource indication information required by the at least one resource unit is equal to a number of bits of resource indication information required by at least one other resource unit.

11. The method according to any one of claims 1 to 10, wherein at least one resource unit of the terminal satisfies at least one of the following, or in a case that the second indication scheme is configured or activated, at least one resource unit of the terminal satisfies at least one of the following:
when the at least one resource unit comprises a plurality of resource units, resource allocation types of the plurality of resource units are the same;
the resource allocation type of the at least one resource unit is a specific resource allocation type;
the resource allocation type of the at least one resource unit comprises at least one of dynamic type and type 0;
the resource allocation type of the at least one resource unit comprises at least one of dynamic type, type 0, and type 2 with the SCS of the resource unit being the first SCS;
the resource allocation type of the at least one resource unit comprises at least one of dynamic type and type 1;
the resource allocation type of the at least one resource unit comprises at least one of dynamic type, type 1, or type 2 with the SCS of the resource unit being the second SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth of the at least one resource unit is less than the bandwidth of at least one other resource unit, and the other resource unit is a resource unit incapable of being indicated by control signaling;
the frequency domain resources of the at least one resource unit are less than the frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced hybrid automatic repeat request acknowledgement HARQ-ACK codebook;
the terminal is not configured with or does not support HARQ retransmission; and
the resource allocation type of the at least one resource unit comprises one of dynamic type, type 1, and type 2.

12. The method according to claim 11, wherein the resource allocation types of the at least one resource unit being the same comprises at least one of the following:
the resource allocation types of the at least one resource unit are all type 0;
the resource allocation types of the at least one resource unit are all type 1;
the resource allocation types of the at least one resource unit are all type 2 with the SCS of the resource unit being the first SCS;
the resource allocation types of the at least one resource unit are all type 2 with the SCS of the resource unit being the second SCS; and
the resource allocation types of the at least one resource unit are all dynamic type.

13. The method according to claim 11 or 12, wherein in a case that the first indication scheme is configured or activated, at least one resource unit of the terminal satisfies at least one of the following:
when the at least one resource unit comprises a plurality of resource units, resource allocation types of the plurality of resource units are the same;
the resource allocation type of the at least one resource unit is a specific resource allocation type;
the resource allocation type of the at least one resource unit comprises at least one of dynamic type and type 0;
the resource allocation type of the at least one resource unit comprises at least one of dynamic type, type 0, or type 2 with the SCS of the resource unit being the first SCS;
the bandwidth or frequency domain resources of the at least one resource unit are equal to the bandwidth or frequency domain resources of at least one other resource unit;
the number of bits of resource indication information required by the at least one resource unit is equal to the number of bits of resource indication information required by at least one other resource unit;
the bandwidth of the at least one resource unit is less than the bandwidth of at least one other resource unit, and the other resource unit is a resource unit incapable of being indicated by control signaling;
the frequency domain resources of the at least one resource unit are less than the frequency domain resources of at least one other resource unit, and the other resource unit is a resource unit incapable of being indicated by control signaling;
the number of bits of resource indication information required by the at least one resource unit is less than the number of bits of resource indication information required by at least one other resource unit, and the other resource unit is a resource unit incapable of being indicated by control signaling;
the terminal is not configured with a dormant resource unit or does not support dormancy;
the terminal is not configured with or does not support an enhanced HARQ-ACK codebook; and
the terminal is not configured with or does not support HARQ retransmission.

14. The method according to claim 13, wherein the resource allocation types of the at least one resource unit being the same comprises at least one of the following:
the resource allocation types of the at least one resource unit are all type 0;
the resource allocation types of the at least one resource unit are all type 2 with the SCS of the resource unit being the first SCS; and
the resource allocation types of the at least one resource unit are all dynamic type.

15. The method according to any one of claims 1 to 14, wherein the target resource unit does not comprise a specific resource unit, or the target resource unit comprises a resource unit other than the specific resource unit, and the specific resource unit satisfies at least one of the following:
the specific resource unit is a resource unit with a specific identifier;
an initial resource unit;
a resource allocation type of the specific resource unit is type 1;
a resource allocation type of the specific resource unit is type 2 with an SCS of the specific resource unit being the second SCS;
a bandwidth of the specific resource unit is larger than the bandwidth of at least one other resource unit;
frequency domain resources of the specific resource unit are more than frequency domain resources of at least one other resource unit;
a bandwidth or frequency domain resources of the specific resource unit are different from a bandwidth or frequency domain resources of at least one other resource unit;
the number of bits of resource indication information required by the specific resource unit is larger than the number of bits of resource indication information required by at least one other resource unit; and
the number of bits of resource indication information required by the specific resource unit is different from the number of bits of resource indication information required by at least one other resource unit.

16. The method according to claim 1, wherein the method further comprises:
obtaining interpretation information of a first information field; and
interpreting the first information field based on the interpretation information of the first information field to obtain the target resource indication information.

17. The method according to claim 16, wherein the interpretation information of the first information field is used to indicate at least one of the following:
a value of the first information field corresponding to an invalid resource indication information;
that the resource indication information indicated by the first information field is invalid;
that the first information field is used to indicate valid resource indication information or invalid resource indication information;
a padding value for padding the first information field; and
an interpretation manner of the first information field.

18. The method according to claim 16 or 17, wherein the interpretation information of the first information field is obtained via at least one information field in second DCI.

19. The method according to claim 18, wherein
the second DCI is DCI for obtaining the target resource indication information; or
the second DCI is DCI carrying resource unit indication information, wherein the resource unit indication information is used to indicate the target resource unit; or
the second DCI is DCI that indicates or triggers resource unit switching for at least one object, wherein resource indication information corresponding to the at least one object is invalid.

20. The method according to claim 1, wherein the determining, by a terminal, target resource indication information according to a first resource unit or a target resource unit comprises:
in a case that the first information field indicates valid resource indication information, performing padding or truncation processing to the first information field based on the target resource unit, and determining the target resource indication information based on the padded or truncated first information field; or
in a case that the resource indication information indicated by the first information field is invalid, performing no processing to the first information field, or in a case that the resource indication information indicated by the first information field is invalid, performing padding or truncation processing to the first information field based on the target resource unit, without determining that target resource indication information is valid; that the target resource indication information is invalid; or target object scheduling information based on the padded or truncated first information field.

21. The method according to any one of claims 1 to 20, wherein the determining according to the target resource indication information that the target resource indication information is invalid comprises at least one of the following:
when the target resource indication information is a specific value, determining that the target resource indication information is invalid;
when the resource allocation type of the target resource unit is type 0, dynamic type, or type 2 with the SCS of the target resource unit being the first SCS, and N bits of the target resource indication information are all 0s, determining that the target resource indication information is invalid;
when the resource allocation type of the target resource unit is type 0, dynamic type, or type 2, the SCS of the target resource unit is the first SCS, and N bits of the target resource indication information are all 1s, determining that the target resource indication information is invalid, wherein the N bits are obtained by padding with 1;
when the resource allocation type of the target resource unit is type 1, dynamic type, or type 2 with the SCS of the target resource unit being the second SCS, and N bits of the target resource indication information are all 1s, determining that the target resource indication information is invalid, wherein the N bits are obtained by padding with 1;
when a resource allocation type of the target resource unit is type 1, dynamic type, or type 2 with the SCS of the target resource unit being the second SCS, and N bits of the target resource indication information are all 0s, determining that the target resource indication information is invalid;
when a resource allocation type of the target resource unit is type 1, dynamic type, or type 2 with the SCS of the target resource unit being the second SCS, and M bits among N bits of the target resource indication information are all 0s, determining that the target resource indication information is invalid; and
when the resource allocation type of the target resource unit is type 1, dynamic type, or type 2 with the SCS of the target resource unit being the second SCS, and M bits among N bits of the target resource indication information are all 1s, determining that the target resource indication information is invalid.

22. A wireless communication method, comprising:
indicating, by a network-side device, target resource indication information to a terminal, wherein the target resource indication information is associated with a target object, and the target resource indication information is used to determine at least one of the following: that target resource indication information is valid; that the target resource indication information is invalid; or scheduling information of the target object.

23. A wireless communication apparatus, comprising:
a processing unit, configured to determine target resource indication information according to a first resource unit or a target resource unit, wherein the first resource unit comprises a resource unit that is in use or activated, the target resource unit is a resource unit indicated by control signaling, and the target resource indication information is associated with a target object; and
determine at least one of the following according to the target resource indication information:
that target resource indication information is valid; that the target resource indication information is invalid; or scheduling information of the target object.

24. A wireless communication apparatus, comprising:
a communication unit, configured to indicate target resource indication information to a terminal, wherein the target resource indication information is associated with a target object, and the target resource indication information is used to determine at least one of the following: that target resource indication information is valid; that the target resource indication information is invalid; or scheduling information of the target object.

25. A terminal, comprising a memory, a processor, and a computer program stored on the memory and executable on the processor, wherein when the computer program is executed by the processor, the steps of the method according to any one of claims 1 to 21 are implemented.

26. A network-side device, comprising a memory, a processor, and a computer program stored on the memory and executable on the processor, wherein when the computer program is executed by the processor, the step of the method according to claim 22 is implemented.

27. A readable storage medium, wherein a program or an instruction is stored on the readable storage medium, and when the program or instruction is executed by a processor, the wireless communication method according to any one of claims 1 to 21 is implemented, or the step of the wireless communication method according to claim 22 is implemented.
